# EUROPEAN PATENT APPLICATION

(11) **EP 4 546 107 A1**
(43) Date of publication of application: **30.04.2025**
(21) Application number: 24208040.6
(22) Date of filing: 22.10.2024
(51) Int. Cl.: G06F 3/12, G06F 1/26, H04N 1/00, B41J 3/36

(54) **PRINTING APPARATUS, CONTROL METHOD, AND PROGRAM**

(30) Priority: 23.10.2023 JP 2023181808; 20.12.2023 JP 2023215050
(71) Applicant: CANON KABUSHIKI KAISHA, Tokyo 146-8501 (JP)
(72) Inventor: ABE, Shodai, Tokyo, 146-8501 (JP); FUJIWARA, Izumi, Tokyo, 146-8501 (JP); TAKAHASHI, Ryohei, Tokyo, 146-8501 (JP)
(74) Representative: TBK

(57) **Abstract**

Provided is a technique that can improve usability for a user. A printing apparatus (10) can execute an operation by using power supplied from an external power source via a USB cable, and includes: an obtaining unit (216) configured to obtain information on power feed from the USB cable; and a notification unit (216) capable of performing notification of a power feed condition and information on the operation in the printing apparatus based on the information on the power feed obtained by the obtaining unit. The information on the operation includes an instruction for enabling execution of the operation in the printing apparatus.

## Description

### BACKGROUND OF THE INVENTION

### Field of the Invention

The present invention relates to a printing apparatus, a control method, and a program.

### Description of the Related Art

A printing apparatus that operates by using power supplied via a USB cable and power stored in a storage battery has been conventionally known. Japanese Patent Laid-Open No. 2021-187045 discloses a technique in which printing is executed based on information on power fed via a USB cable, and in the case where the printing cannot be executed, notification indicating that the printing cannot be performed by using power supplied from a connected external power source is made.

However, in the technique disclosed in Japanese Patent Laid-Open No. 2021-187045, the user can only recognize that the printing cannot be performed by using power supplied from the external power source in the case where the printing operation is executed, and usability is poor for the user.

### SUMMARY OF THE INVENTION

The present invention has been made in view of the above problem, and provides a technique that can improve usability for a user.

The present invention can improve usability for a user.

The present invention in its first aspect provides a printing apparatus as specified in claims 1 to 12, 14 to 23.

The present invention in its second aspect provides a control method as specified in claim 13.

The present invention in its third aspect provides a program as specified in claim 18.

Further features of the present invention will become apparent from the following description of exemplary embodiments with reference to the attached drawings.

### BRIEF DESCRIPTION OF THE DRAWINGS

Fig. 1 is a schematic configuration diagram of a printing system;
Fig. 2 is a block diagram illustrating a configuration of a control system of a printing apparatus;
Fig. 3 is a block diagram illustrating a configuration of a power source control circuit;
Fig. 4 is a table illustrating a power supply amount of each connection specification;
Fig. 5 is a table illustrating a performance of executing each type of operation depending on the connection specification;
Fig. 6 is a flowchart illustrating processing contents of notification processing at start of a copying operation;
Figs. 7A and 7B are diagrams illustrating examples of notification screens displayed in the notification processing of Fig. 6;
Fig. 8 is a flowchart illustrating processing contents of notification processing at start of a maintenance operation;
Figs. 9A and 9B are diagrams illustrating examples of notification screens displayed in the notification processing of Fig. 8;
Fig. 10 is a diagram showing a relation between Figs. 10A and 10B;
Figs. 10A and 10B are flowcharts illustrating processing contents of notification processing at start of a printing operation and a reading operation;
Figs. 11A to 11C are diagrams illustrating examples of notification screens displayed in the notification processing of Figs. 10A and 10B;
Figs. 12A to 12C are diagrams illustrating examples of notification screens displayed in the notification processing of Figs. 10A and 10B;
Fig. 13 is a flowchart illustrating processing contents of notification processing in activation and wireless LAN setting;
Figs. 14A and 14B are diagrams illustrating examples of notification screens displayed in the notification processing of Fig. 13;
Figs. 15A and 15B are diagrams illustrating examples of notification screens displayed in the notification processing of Fig. 13;
Fig. 16 is a flowchart illustrating processing contents of power feed absence notification processing;
Fig. 17 is a diagram illustrating an example of a notification screen displayed in the power feed absence notification processing of Fig. 16;
Fig. 18A to 18C are diagrams illustrating examples of state notification screens;
Figs. 19A to 19C are diagrams illustrating relationships among a USB power feed amount, voltage of a power storage device, and operation modes;
Fig. 20 is a flowchart illustrating processing contents in the activation of the printing apparatus;
Fig. 21 is a flowchart illustrating processing contents from start to end of a job;
Fig. 22 is a diagram illustrating relationships among elapsed time, a voltage change in an EDLC, and notification timings;
Fig. 23A to 23C are diagram illustrating examples of notification screens displayed to a user in the case where functions are restricted;
Fig. 24 is a flowchart illustrating processing of comparing an operation mode with an operation mode of a previously-executed job in a fifth embodiment; and
Fig. 25 is a diagram illustrating an example of a notification screen displayed to the user in the fifth embodiment.

### DESCRIPTION OF THE EMBODIMENTS

Examples of embodiments of a printing apparatus, a control method, and a program are explained below with reference to the attached drawings. Note that the following embodiments do not limit the present invention, and not all of combinations of features explained in the present embodiments are necessarily essential for solving means of the present invention. Moreover, positions, shapes, and the like of constituent elements described in the embodiments are merely examples, and are not intended to limit the present invention to these positions, shapes, and the like.

### (First Embodiment)

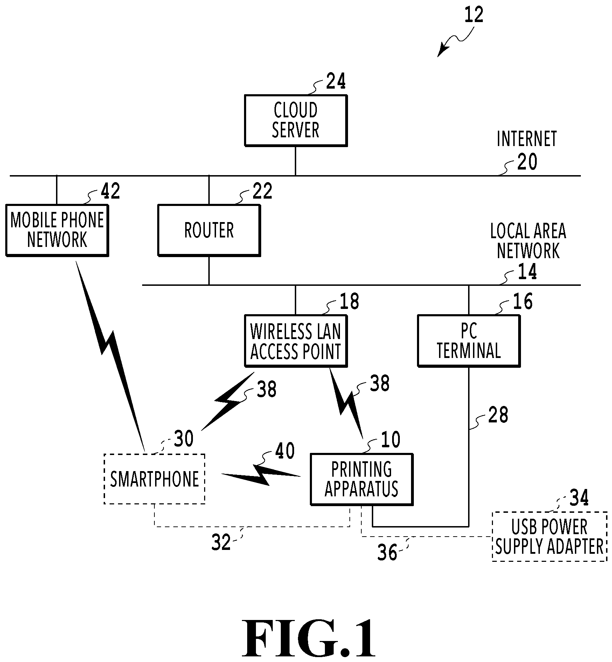

First, a printing apparatus according to a first embodiment is explained with reference to Figs. 1 to 7.

### <Printing System>

Fig. 1 is a schematic configuration diagram illustrating a printing system including the printing apparatus according to the present embodiment. A printing system 12 including a printing apparatus 10 according to the present embodiment includes the printing apparatus 10 configured to perform printing by ejecting ink and a PC terminal 16 serving as an external apparatus connected to the printing apparatus 10 via a local area network 14. Note that the printing system 12 includes a wireless LAN access point 18 and the printing apparatus 10 can connect to the local area network 14 by wirelessly connecting to the wireless LAN access point 18. Moreover, the printing system 12 includes a router 22 for connecting the local area network 14 to the Internet 20, and a cloud server 24 connected to the Internet 20. The printing apparatus 10 and the PC terminal 16 can thereby communicate with the cloud server 24 connected to the Internet 20 via the router 22.

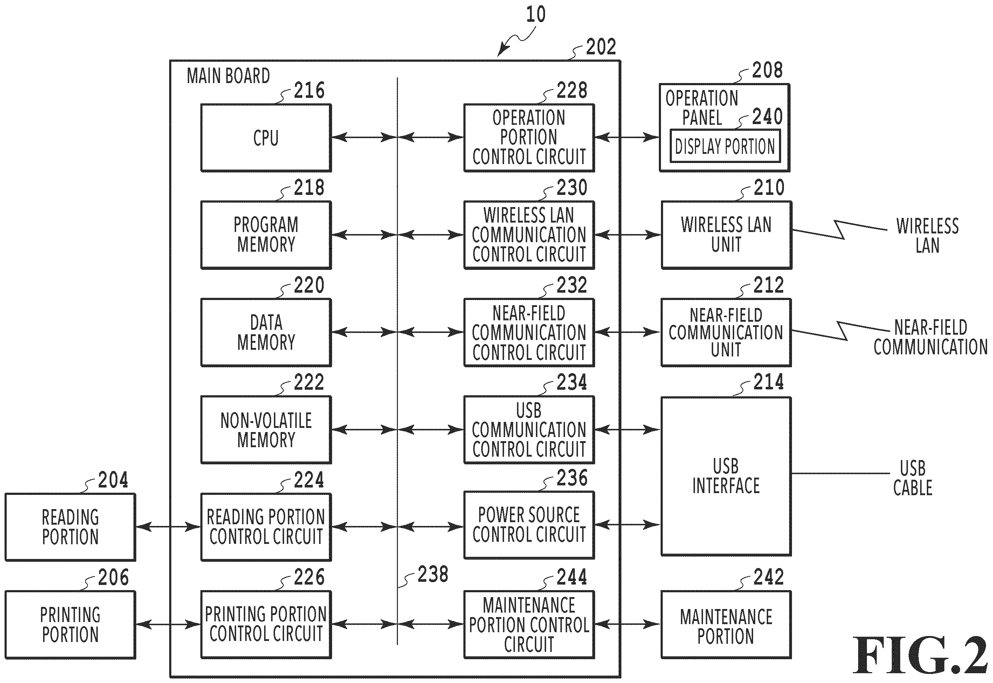

The printing apparatus 10 includes a universal serial bus (USB) interface 214 (see Fig. 2), and is configured to be connectable to various apparatuses. In the present embodiment, the printing apparatus 10 includes the USB interface 214 to which a USB cable can be connected, and is connected to the PC terminal 16 via a USB cable 28. The printing apparatus 10 can thereby operate by using power supplied from the PC terminal 16 via the USB cable 28. As described above, in the present embodiment, the USB cable including the USB cable 28 functions as a connection member configured to connect the printing apparatus 10 and the external apparatus to each other.

Moreover, in the printing system 12, a smartphone 30 can be used as the external apparatus. In this case, the smartphone 30 and the printing apparatus 10 are connected to each other via a USB cable 32, and the printing apparatus 10 can operate by using power supplied from the smartphone 30. Moreover, in the printing system 12, the printing apparatus 10 can be connected to a USB power source adapter 34 via a USB cable 36, and operate by using power supplied from a commercial power source. Note that, although illustration is omitted, the printing apparatus 10 is configured to be capable of operating by using power, supplied from a mobile battery or a USB host port installed in a seat or the like of an airplane or a bus, via the USB cable.

Wireless LAN infrastructure mode connection 38 is used between the wireless LAN access point 18 and each of the smartphone 30 and the printing apparatus 10. The printing apparatus 10 has a mode in which the printing apparatus 10 itself operates as a wireless LAN access point. In the case where the printing apparatus 10 operates as the access point, the smartphone 30 can directly connect (direct connection 40) to the printing apparatus 10. Moreover, the smartphone 30 can connect to the cloud server 24 connected to the Internet 20 via a mobile phone network 42.

In the case where the printing apparatus 10 and each of the PC terminal 16 and the smartphone 30 are connected to each other via the USB cable, the USB cable can be used for data communication between the printing apparatus 10 and each of the PC terminal 16 and the smartphone 30, but the present embodiment is not limited to this configuration. The printing apparatus 10 can operate by using the power supplied from the PC terminal 16 or the smartphone 30 connected via the USB cable, and perform the data communication by using the wireless LAN or near-field communication. Note that the printing system 12 illustrated in Fig. 1 is an example of a printing system including the printing apparatus 10 according to the present embodiment, and may have a configuration different from the configuration illustrated in Fig. 1. For example, a configuration having functions of the wireless LAN access point 18 and the router 22 that is, for example, a router with an access point function may be used instead of the wireless LAN access point 18 and the router 22.

### <Configuration of Control System of Printing Apparatus>

Next, a configuration of a control system of the printing apparatus 10 is explained. Fig. 2 is a block diagram illustrating the configuration of the control system of the printing apparatus 10.

The printing apparatus 10 includes a main board 202 configured to control the entire printing apparatus 10, a reading portion 204 configured to read an original, a printing portion 206 capable of performing printing on a print medium, and an operation panel 208 on which a user can perform operation. Moreover, the printing apparatus 10 includes a wireless LAN unit 210 for connection to the wireless LAN, a near-field communication unit 212 for performing near-field communication, and the USB interface 214 connectable to the USB cable. Furthermore, the printing apparatus 10 includes a maintenance portion 242 configured to execute a maintenance operation for maintaining and recovering a printing performance in the printing portion 206 to a favorable state. Note that, since various publicly-known techniques can be used for detailed configurations of the reading portion 204, the printing portion 206, and the maintenance portion 242, detailed explanation of the configurations are omitted.

The main board 202 includes a CPU 216 of a microprocessor form, a program memory 218 of a ROM form, a data memory 220 of a RAM form, and a non-volatile memory 222 capable of holding saved information without supply of power. Moreover, the main board 202 includes a reading portion control circuit 224 for controlling the reading portion 204, a printing portion control circuit 226 for controlling the printing portion 206, and an operation portion control circuit 228 for controlling the operation panel 208. Furthermore, the main board 202 includes a wireless LAN communication control circuit 230 for controlling the wireless LAN unit 210 and a near-field communication control circuit 232 for controlling the near-field communication unit 212. Moreover, the main board 202 includes a USB communication control circuit 234 configured to control drive of the USB interface 214 and a power source control circuit 236 configured to control an amount of power supplied from the USB interface 214. Furthermore, the main board 202 includes a maintenance portion control circuit 244 for controlling the maintenance portion 242. The configurations provided in the main board 202 are connected to one another by an internal bus 238.

The CPU 216 operates based on a control program stored in the program memory 218 and information held in the data memory 220 while using the data memory 220 as a work area. Moreover, the CPU 216 writes various setting values, data, and the like into the non-volatile memory 222 to be capable of continuously operating based on the setting values and data written in the non-volatile memory 222 in the case where the power source is turned off and is then turned on again. For example, a semiconductor storage device such as a flash memory can be used as the non-volatile memory 222. Although the flash memory can maintain storage contents also in the case where electrification is stopped, the number of times of rewriting possible in each memory element is limited in many cases. Accordingly, the printing apparatus 10 needs to be designed in consideration of timings at which data is written into the non-volatile memory 222 in a product life of the printing apparatus 10. Generally, the larger the guaranteed number of times of rewriting is, the higher the equipment cost of the storage device is.

The CPU 216 controls the reading portion 204 via the reading portion control circuit 224 to read an original and store the read data as image data in the data memory 220. Moreover, the CPU 216 controls the printing portion 206 via the printing portion control circuit 226 to perform printing on the print medium based on print data obtained by performing image processing on the image data stored in the data memory 220. Moreover, the CPU 216 can display a state of the printing apparatus 10, display selectable functions as a menu, and receive operations from the user on a display portion 240 provided in the operation panel 208 by controlling the operation portion control circuit 228.

The CPU 216 controls the wireless LAN unit 210 via the wireless LAN communication control circuit 230 to perform wireless LAN communication with other communication terminal apparatuses. Moreover, the CPU 216 controls the near-field communication unit 212 via the near-field communication control circuit 232 to detect connection with other near-field communication terminals and exchange data with the other near-field communication terminals.

The CPU 216 operates the USB interface 214 via the USB communication control circuit 234 to perform USB communication with other external apparatuses connected by the USB cable. Moreover, the CPU 216 controls the power source control circuit 236 to grasp and control the supply amount of power from the USB interface 214 and a power storage amount of power in the power source control circuit 236. Furthermore, the CPU 216 controls the maintenance portion 242 via the maintenance portion control circuit 244 to execute various maintenance operations on the printing portion 206.

### <Configuration of Power Source Supply System of Printing Apparatus>

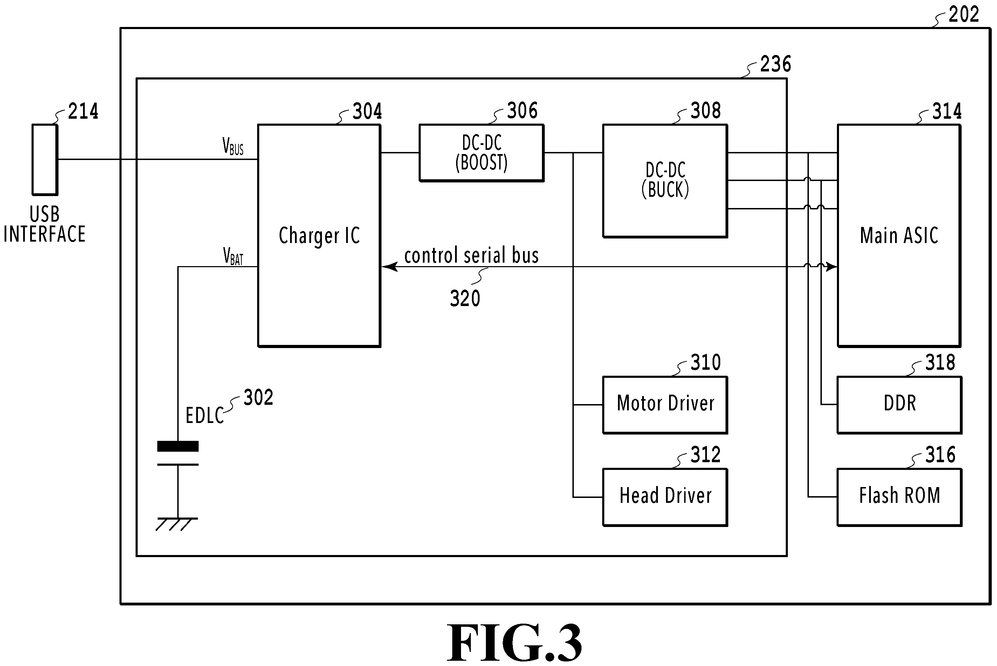

Next, a configuration of a power source supply system of the printing apparatus 10 is explained. Fig. 3 is a block diagram illustrating the configuration of the power source supply system of the printing apparatus 10.

The power source control circuit 236 includes an electric double-layer capacitor (EDLC) 302 capable of storing and feeding power and a charger IC 304 configured to perform control of an inputted current and the like. Moreover, the power source control circuit 236 includes a DC-DC (boost) 306 that is a booster circuit configured to boost voltage from the charger IC 304 and a DC-DC (buck) 308 that is a buck circuit configured to buck voltage outputted from the DC-DC 306. Moreover, the power source control circuit 236 includes a motor driver 310 configured to drive motors in the reading portion 204 and the printing portion 206 and a head driver 312 configured to drive a reading head (not illustrated) and a printing head (not illustrated).

The printing apparatus 10 can be driven by output voltage V_{BUS} from the USB interface 214 and output voltage V_{BAT} from the EDLC 302, and the charger IC 304 performs power source control. The voltage outputted from the charger IC 304 is boosted by the DC-DC (boost) 306, and the motor driver 310 uses the voltage boosted by the DC-DC 306 to drive the motors of the reading portion 204 and the printing portion 206. Moreover, the voltage boosted by the DC-DC 306 is used by the head driver 312 to drive the reading head of the reading portion 204 and the printing head of the printing portion 206. In the power source control circuit 236, the voltage boosted by the DC-DC 306 is used to drive relatively-large loads. Moreover, the voltage boosted by the DC-DC 306 is inputted into the DC-DC 308 to generate logic power source voltage used in an ASIC 314, a ROM 316, and a DDR 318. Note that the ASIC 314 is a custom IC including the CPU 216 and a peripheral circuit.

The charger IC 304 is an IC having a function of executing control of an current inputted from the USB interface 214 and charge control and abnormal operation protection of the EDLC 302. The charger IC 304 can communicate with the ASIC 314 connected via a control serial bus 320. Note that the control serial bus 320 forms part of the internal bus 238. In the present embodiment, communication between the charger IC 304 and the ASIC 314 is performed in a universal asynchronous receiver transmitter (UART) method.

The charger IC 304 performs determination of an input current according to the external apparatus (PC terminal 16, the smartphone 30, or the like) being a supply source. In the present embodiment, for example, the charger IC 304 performs determination in conformity with USB battery charge (USB-BC) specifications (BC determination) or determination in conformity with USB power delivery (USB-PD) specifications (CC determination). The ASIC 314 receiving the result of the BC determination or the CC determination from the charger IC 304 determines thresholds of a charge current, full charge, over discharge voltage, and the like of the charger IC 304, and sets the thresholds in the charger IC 304.

The EDLC 302 is an electric double-layer capacitor. The EDLC 302 receives charge control from the charger IC 304 based on an instruction of the ASIC 314, and performs power supply to the DC-DC 306, the motor driver 310, and the head driver 312 at the output voltage V_{BAT}. The output voltage V_{BAT} of the EDLC 302 can be transmitted from the charger IC 304 to the ASIC 314. Moreover, various pieces of information on the power supply can be transmitted from the charger IC 304 to the ASIC 314. These pieces of information are used for various types of control in the printing apparatus 10.

For example, in the case where the output voltage V_{BAT} of the EDLC 302 decreases in a printing operation of the printing apparatus 10, the ASIC 314 stops the printing operation, and gives an instruction to the charger IC 304 to perform charge control until the output voltage V_{BAT} of the EDLC 302 reaches a certain threshold. Then, in the case where the ASIC 314 receives that the output voltage V_{BAT} has reached the certain threshold from the charger IC 304, the ASIC 314 resumes the printing operation. Moreover, for example, in the case where the power feed stops due to pulling-out of the USB cable during an operation using the power supplied from the USB interface 214, an operation corresponding to power feed stop is immediately started based on notification from the charger IC 304 to the ASIC 314. As described above, in the present embodiment, the EDLC 302 functions as a power storage portion configured to store power.

### <Connection Specifications>

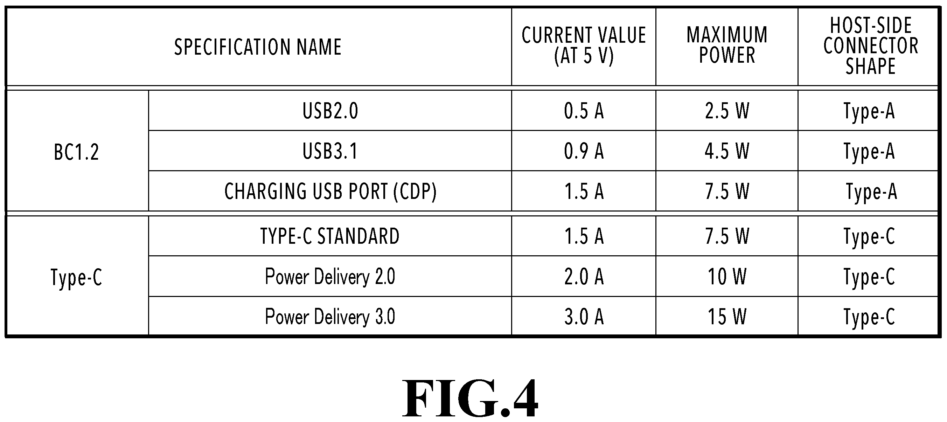

Next, connection specifications of the printing apparatus 10 and the external power source (external apparatus) are explained. Fig. 4 is a table illustrating a power supply amount of each connection specification.

BC 1.2 is a specification based on the USB-battery charge (BC) specification, and a method of electrically determining a charging USB port (CDP) by using B+ and D-signal lines of a USB port for data communication is defined as a method of determining the charging USB port. Moreover, in a case of a normal USB port that is not a charging port, communication based on the USB specification is performed after completion of this detection, and the version of the USB can be determined in this communication.

In USB Type-C, a power delivery specification is defined, and notification of the power supply amount can be made in communication with a CC pin. Note that, although the supplied power source voltage can be controlled in a range from 5 V to 48 V in the power delivery specification, values in the case where the maximum power is supplied at 5 V are illustrated in Fig. 4.

### <Performance of Executing Each Type of Operation Depending on Connection Specification>

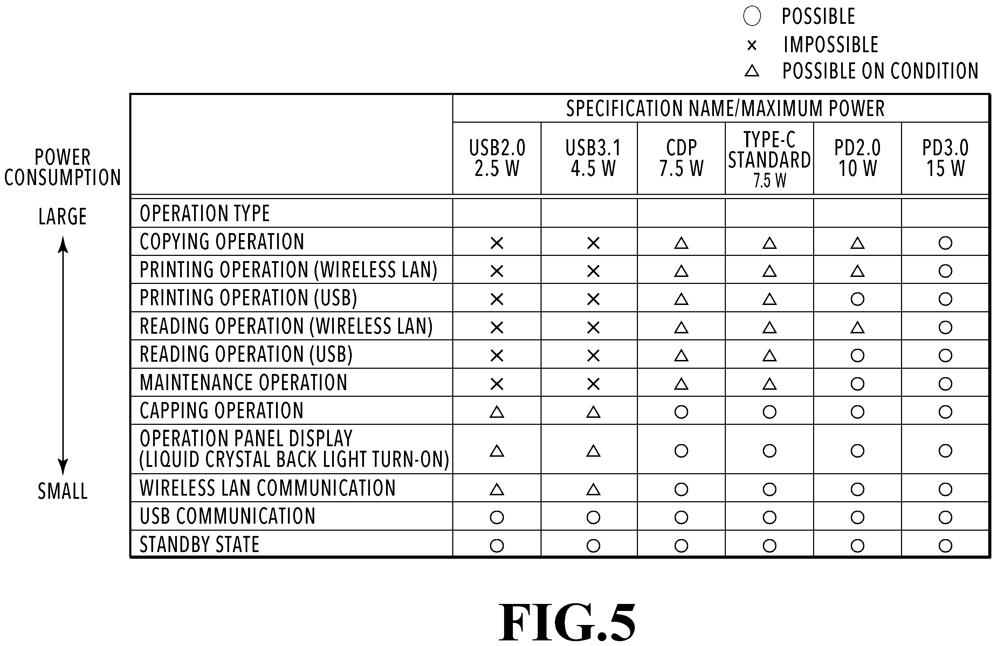

Next, a performance of executing each of operations executable in the printing apparatus 10 depending on the connection specification is explained. Fig. 5 is a table illustrating the performance of executing each of the operations executable in the printing apparatus 10 depending on the connection specification. Hereinafter, the "table illustrating the performance of executing each of the operations executable in the printing apparatus depending on the connection specification" is also simply referred to as "table illustrating the execution performance" as appropriate.

In Fig. 5, the execution performance is described by a combination of the type of operation (operation type) executable in the printing apparatus 10 and a type of power source supply specification (connection specification of Fig. 4). In the printing apparatus 10, the table describing the execution performance like Fig. 5 may be held in the program memory 218 as table data or may be implemented as a determination code as a program code.

The operation types include a copying operation in which a read original is printed, the printing operation in which printing is performed based on the print data, a reading operation in which an original is read, and a maintenance operation for the printing portion 206. In the maintenance operation, for example, the ink is forcedly sucked from nozzles from which the ink is ejected, the ink not contributing to printing is ejected into a cap for protecting the head in which the nozzles are formed, and a surface on which the nozzles are formed is wiped. In the case where the maintenance operation is executed, power is consumed for driving of a pump for the suction, ejecting of the ink, and moving of a wiper for the wiping. Note that, although detailed explanation and illustration are omitted, the cap, the pump, and the wiper are provided in the maintenance portion 242.

Moreover, the operation types include a capping operation in which the head is protected by the cap. Protecting the surface of the head on which the nozzles are formed by capping suppresses drying and sticking of the ink in the nozzles and suppresses breakage of the head due to moving of the head caused by vibration in carrying of the printing apparatus 10. In the capping operation, power is consumed for moving of the head to a position where the capping is possible and driving of a motor for causing the cap to be pressed against the head. However, the capping operation alone can suppress the power consumption amount to a level lower than that in the maintenance operation.

Moreover, the operation types include display of the operation panel 208, wireless LAN communication, and USB communication. Although the display of the operation panel 208, the wireless LAN communication, and the USB communication are operations executed in parallel with other operations, these operations consume power also in a state where no other operations are executed. For example, in the display of the operation panel 208, power is consumed to display a screen on the display portion 240. Moreover, in the wireless LAN communication, power is consumed to cause the wireless LAN unit 210 to operate. In Fig. 5, the operation types are generally arranged such that the closer the operation type is to the top of the table, the larger the power consumption is.

In Fig. 5, the execution performance for each operation type is expressed in three levels of "∘", "Δ", and "×". "o" indicates that the power necessary for the operation is lower than the power source supply performance in the combination of the operation type and the power source supply specification type, and the operation can be thus continuously executed. "Δ" indicates that the power necessary for the operation is higher than the power source supply performance, but the operation can be executed by consuming the power stored in the EDLC 302. Note that the operation in this case cannot be continuously executed, but is executed on condition. For example, the operation is executed with speed reduced to reduce the power consumption per unit time, or is intermittently executed with an inactive period for appropriate charging provided in the middle of the operation, "×" indicates that the power necessary for the operation is far higher than the power source supply performance, and not even the conditional operation cannot be executed even if the power of the EDLC 302 is used.

### <Notification Processing>

In the above configuration, notification processing of giving notification of information on a power feed condition and the operation depending on the power feed amount from the USB interface 214 is executed at various timings in the printing apparatus 10. The notification processing executed at each timing is explained below in detail.

### =Copying Operation=

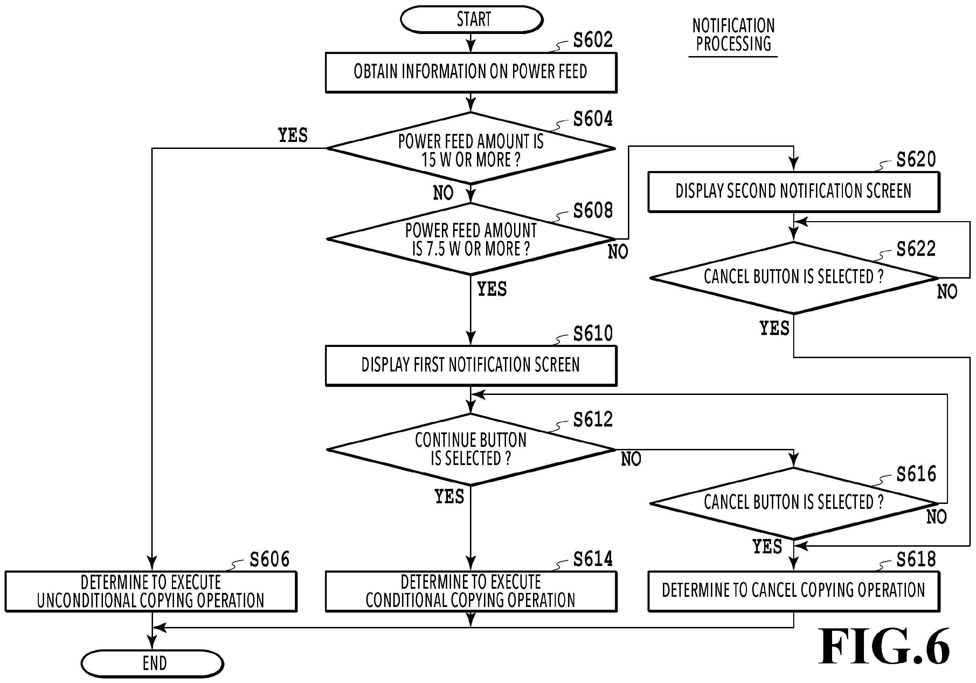

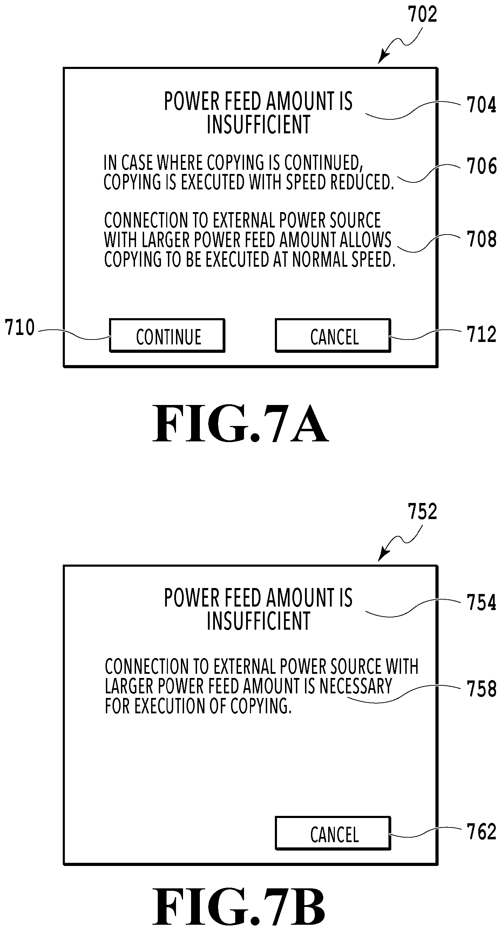

First, the notification processing executed at start of the copying operation is explained. In the printing apparatus 10, in the case where an instruction to start the copying operation is given from the operation panel 208, there is executed notification processing in which whether or not to execute the operation is determined while the notification of the power feed condition and the information on the operation is performed based on the supplied power. Fig. 6 is a flowchart illustrating detailed processing contents of the notification processing executed at the start of the copying operation. Figs. 7A and 7B are diagrams illustrating examples of notification screens in the notification of the notification processing of Fig. 6. Fig. 7A illustrates a first notification screen notifying that the conditional operation is possible, and Fig. 7B illustrates a second notification screen notifying that the operation is impossible.

The CPU 216 performs the series of processes illustrated in the flowchart of Fig. 6 by loading a program code stored in the program memory 218 onto the data memory 220 and executing the program code. Alternatively, all or part of functions of the steps in Fig. 6 may be executed by hardware such as an ASIC or an electric circuit. In the present specification, sign S in the explanation of each process in the flowchart means step in the flowchart.

In the case where the notification processing of Fig. 6 is started, first, in S602, the CPU 216 obtains information on the power feed from the USB interface 214. In S602, in the case where the USB cable is connected to the USB interface 214, the CPU 216 refers to results of the BC determination and the CC determination detected by the power source control circuit 236, and obtains the connection specification (see Fig. 4), a current value, and maximum power as the information on the power feed.

Next, in S604, the CPU 216 determines whether or not the power feed amount from the USB interface 214 is 15 W or more. Specifically, in S604, the CPU 216 determines whether or not the maximum power is 15 W or more in the information on the power feed obtained in S602. Note that, in S604, the determination may be made based on whether or not the symbol expressing the execution performance in the table stored in the program memory 218 and describing the execution performances is "∘". In this case, if the symbol expressing the execution performance for the operation type of "copying operation" in the table describing the execution performances is "o" based on the connection specification and the maximum power in the information on the power feed obtained in S602, the processing proceeds to S606 to be described later. Meanwhile, if the symbol is a symbol other than "∘", the processing proceeds to S608 to be described later. Alternatively, in S604, the determination may be made based on the USB specification of the USB cable.

In the case where the CPU 216 determines that the power feed amount from the USB interface 214 is 15 W or more in S604, the processing proceeds to S606, and the CPU 216 determines to execute the unconditional copying operation, and terminates the notification processing. Then, in the printing apparatus 10, the unconditional copying operation is executed based on the contents determined in this notification processing. In the present embodiment, the "condition" for each of the operations is an operation condition for reducing the power consumption, and in the case where the conditional operation is executed, for example, the operation is executed under such a condition that "speed is reduced". Specifically, the conditional operation is an operation in which the power consumption is reduced, that is the speed is reduced. In the case where the CPU 216 determines that the power feed amount from the USB interface 214 is not 15 W or more in S604, the processing proceeds to S608, and the CPU 216 determines whether or not the power feed amount from the USB interface 214 is 7.5 W or more.

Specifically, in S608, the CPU 216 determines whether or not the maximum power is 7.5 W or more in the information on the power feed obtained in S602. Note that, in S608, the determination may be made based on whether or not the symbol expressing the execution performance in the table stored in the program memory 218 and describing the execution performances is "Δ". In this case, if the symbol expressing the execution performance for the operation type of "copying operation" in the table describing the execution performances is "Δ" based on the connection specification and the maximum power in the information on the power feed obtained in S602, the processing proceeds to S610 to be described later. Meanwhile, if the symbol is "×", the processing proceeds to S620 to be described later. Alternatively, in S608, the determination may be made based on the USB specification of the USB cable.

In the case where the CPU 216 determines that the power feed amount from the USB interface 214 is 7.5 W or more in S608, the processing proceeds to S610, and the CPU 216 displays a first notification screen 702 notifying that the conditional operation is possible, on the display portion 240 (see Fig. 7A). In the first notification screen 702, notification indicating that the power feed amount from the USB interface 214 is insufficient is made as an error message 704. Moreover, in the first notification screen 702, notification indicating that the power feed amount from the USB interface 214 is insufficient and thus the copying operation can be executed with the speed reduced is made as an operation message 706.

Moreover, in the first notification screen 702, an instruction for enabling execution of the unconditional copying operation is illustrated as an instruction message 708, and for example, there is made notification prompting connection to an external power source by which the power feed amount from the USB interface 214 is increased. Note that the instruction message 708 may cause a user to use a manual or a two-dimensional code such as QR code (registered trademark) to identify a recommended external power source, or may prompt connection with USB-BC and USB-PD with high power feed amounts. Moreover, a continue button 710 and a cancel button 712 are displayed in the first notification screen 702.

In the case where the continue button 710 is selected, execution of the conditional copying operation is determined. Specifically, execution of the copying operation with the reading speed and the printing speed reduced is determined. Moreover, in the case where the cancel button 712 is selected, cancelling of the copying operation is determined. As described above, in the first notification screen 702, the user is notified of insufficiency of the power feed amount as the power feed condition, and is also notified of the execution of the conditional copying operation and the instruction for enabling execution of the unconditional copying operation as the information on the operation. As described above, in the present embodiment, the CPU 216 functions as a notification portion configured to perform notification of the power feed condition and the information on the operation. Note that the notification portion may include the operation portion control circuit 228 for controlling the operation of the operation panel 208.

In the case where the first notification screen 702 is displayed on the display portion 240, the processing then proceeds to S612, and the CPU 216 determines whether or not the continue button 710 is selected. In the case where the CPU 216 determines that the continue button 710 is selected in S612, the processing proceeds to S614, execution of the conditional copying operation is determined, and the notification processing is terminated. Thereafter, in the printing apparatus 10, the conditional copying operation is executed based on the contents determined in this notification processing.

Meanwhile, in the case where the CPU 216 determines that the continue button 710 is not selected in S612, the processing proceeds to S616, and the CPU 216 determines whether or not the cancel button 712 is selected. In the case where the CPU 216 determines that the cancel button 712 is not selected in S616, the processing returns to S612. Meanwhile, in the case where the CPU 216 determines that the cancel button 712 is selected in S616, the processing proceeds to S618, and the CPU 216 determines to cancel the copying operation, and terminates the notification processing. Thereafter, in the printing apparatus 10, the copying operation is cancelled based on the contents determined in this notification processing.

Meanwhile, in the case where the CPU 216 determines that the power feed amount from the USB interface 214 is not 7.5 W or more in S608, the processing proceeds to S620, and the CPU 216 displays a second notification screen 752 notifying that the operation cannot be executed, on the display portion 240 (see Fig. 7B). In the second notification screen 752, notification indicating that the power feed amount from the USB interface 214 is insufficient is made as an error message 754. Moreover, in the second notification screen 752, an instruction for enabling execution of the copying operation is illustrated as an instruction message 758, and for example, there is made notification prompting connection to an external power source by which the power feed amount from the USB interface 214 is increased.

Note that the instruction message 758 may cause the user to use a manual or a two-dimensional code to identify a recommended external power source, or may prompt connection with USB-BC and USB-PD with high power feed amounts. Moreover, a cancel button 762 is displayed in the second notification screen 752. In the case where the cancel button 762 is selected, cancelling of the copying operation is determined. As described above, in the second notification screen 752, the user is notified of insufficiency of the power feed amount as the power feed condition, and is also notified of the instruction for enabling execution of the copying operation as the information on the operation.

In the case where the second notification screen 752 is displayed on the display portion 240, the processing then proceeds to S622, and the CPU 216 determines whether or not the cancel button 762 is selected. In the case where the CPU 216 determines that the cancel button 762 is not selected in S622, the determination of S622 is performed again. Note that, in the case where the determination of S622 is repeatedly executed for a time period longer than a predetermined time period, the copying operation may be forcedly cancelled. Meanwhile, in the case where the CPU 216 determines that the cancel button 762 is selected in S622, the processing proceeds to S618.

### =Maintenance Operation=

Next, notification processing executed at start of the maintenance operation is explained. In the printing apparatus 10, in the case where an instruction to start the maintenance operation is given from the operation panel 208, there is executed notification processing in which whether or not to execute the operation is determined while notification of the power feed condition and the information on the operation is performed based on the supplied power. Note that a timing at which this notification processing is executed is not limited to a timing at which the instruction to start the maintenance operation is given. For example, in the case where the maintenance operation needs to be executed in execution of the copying operation or the printing operation, this notification processing may be executed before execution of the maintenance operation.

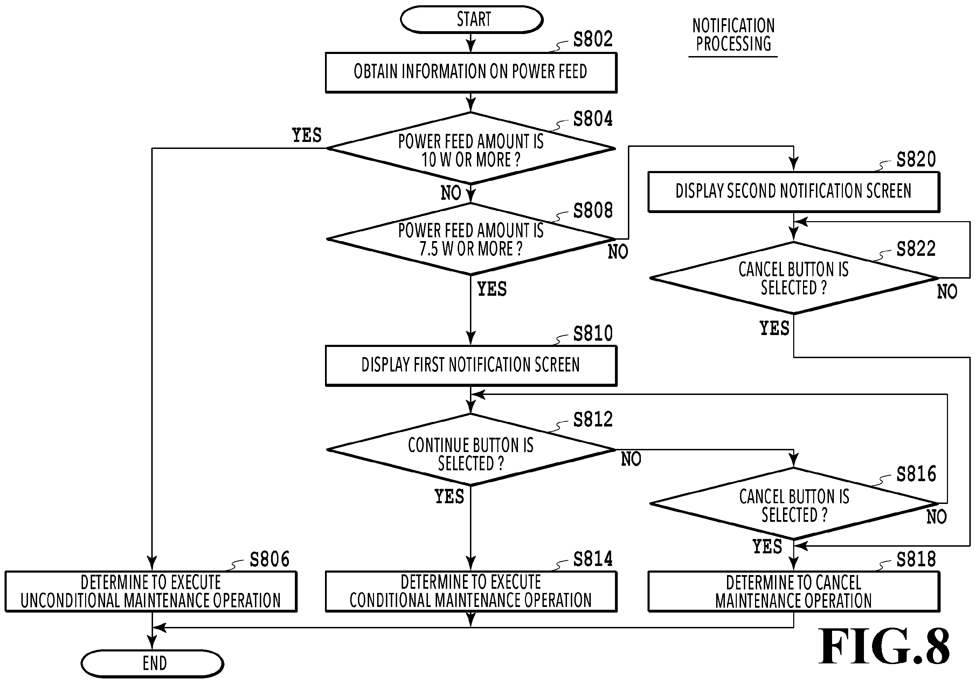

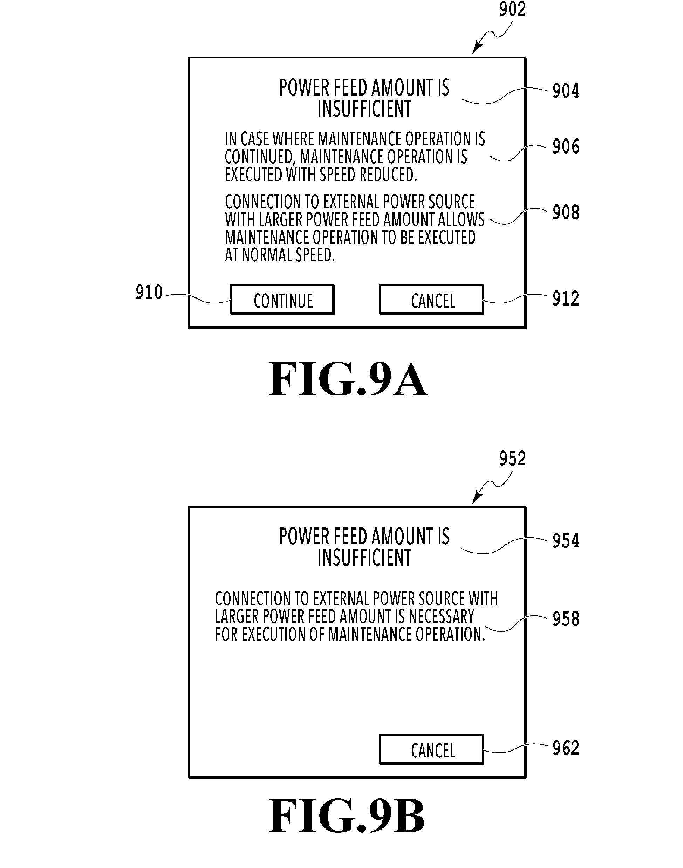

Fig. 8 is a flowchart illustrating detailed processing contents of the notification processing executed at the start of the maintenance operation. Figs. 9A and 9B are diagrams illustrating examples of notification screens in the notification of the notification processing of Fig. 8. Fig. 9A illustrates a first notification screen notifying that the conditional operation is possible, and Fig. 9B illustrates a second notification screen notifying that the operation is impossible. The CPU 216 performs the series of processes illustrated in the flowchart of Fig. 8 by loading a program code stored in the program memory 218 onto the data memory 220 and executing the program code. Alternatively, all or part of functions of the steps in Fig. 8 may be executed by hardware such as an ASIC or an electric circuit.

In the case where the notification processing of Fig. 8 is started, first, in S802, the CPU 216 obtains the information on the power feed from the USB interface 214. Since specific processing contents of S802 are the same as those of the above-mentioned S602, explanation thereof is omitted. Next, in S804, the CPU 216 determines whether or not the power feed amount from the USB interface 214 is 10 W or more. Specifically, in S804, the CPU 216 determines whether or not the maximum power is 10 W or more in the information on the power feed obtained in S802. Note that, in S804, the determination may be made based on whether or not the symbol expressing the execution performance in the table stored in the program memory 218 and describing the execution performances is "∘". In this case, if the symbol expressing the execution performance for the operation type of "maintenance operation" in the table describing the execution performances is "o" based on the connection specification and the maximum power in the information on the power feed obtained in S802, the processing proceeds to S806 to be described later. Meanwhile, if the symbol is a symbol other than "∘", the processing proceeds to S808 to be described later. Alternatively, in S804, the determination may be made based on the USB specification of the USB cable.

In the case where the CPU 216 determines that the power feed amount from the USB interface 214 is 10 W or more in S804, the processing proceeds to S806, and the CPU 216 determines to execute the unconditional maintenance operation, and terminates the notification processing. Then, in the printing apparatus 10, the unconditional maintenance operation is executed based on the contents determined in this notification processing. Meanwhile, in the case where the CPU 216 determines that the power feed amount from the USB interface 214 is not 10 W or more in S804, the processing proceeds to S808, and the CPU 216 determines whether or not the power feed amount from the USB interface 214 is 7.5 W or more.

Specifically, in S808, the CPU 216 determines whether or not the maximum power is 7.5 W or more in the information on the power feed obtained in S802. Note that, in S808, the determination may be made based on whether or not the symbol expressing the execution performance in the table stored in the program memory 218 and describing the execution performances is "Δ". In this case, if the symbol expressing the execution performance for the operation type of "maintenance operation" in the table describing the execution performances is "Δ" based on the connection specification and the maximum power in the information on the power feed obtained in S802, the processing proceeds to S810 to be described later. Meanwhile, if the symbol is "×", the processing proceeds to S820 to be described later. Alternatively, in S808, the determination may be made based on the USB specification of the USB cable.

In the case where the CPU 216 determines that the power feed amount from the USB interface 214 is 7.5 W or more in S808, the processing proceeds to S810, and the CPU 216 displays a first notification screen 902 notifying that the conditional operation is possible, on the display portion 240 (see Fig. 9A). In the first notification screen 902, notification indicating that the power feed amount from the USB interface 214 is insufficient is made as an error message 904. Moreover, in the first notification screen 902, notification indicating that the power feed amount from the USB interface 214 is insufficient and thus the maintenance operation can be executed with the speed reduced is made as an operation message 906.

Moreover, in the first notification screen 902, an instruction for enabling execution of the unconditional maintenance operation is illustrated as an instruction message 908, and for example, there is made notification prompting connection to an external power source by which the power feed amount from the USB interface 214 is increased. Note that the instruction message 908 may cause the user to use a manual or a two-dimensional code to identify a recommended external power source, or may prompt connection with USB-BC and USB-PD with high power feed amounts. Moreover, a continue button 910 and a cancel button 912 are displayed in the first notification screen 902.

In the case where the continue button 910 is selected, execution of the conditional maintenance operation is determined. Specifically, execution of the maintenance operation with the speed reduced is determined. Moreover, in the case where the cancel button 912 is selected, cancelling of the maintenance operation is determined. As described above, in the first notification screen 902, the user is notified of insufficiency of the power feed amount as the power feed condition. Moreover, in the first notification screen 902, the user is notified of execution of the conditional maintenance operation and an instruction for enabling execution of the unconditional maintenance operation as the information on the operation.

In the case where the first notification screen 902 is displayed on the display portion 240, the processing then proceeds to S812, and the CPU 216 determines whether or not the continue button 910 is selected. In the case where the CPU 216 determines that the continue button 910 is selected in S812, the processing proceeds to S814, the CPU 216 determines to execute the conditional maintenance operation, and terminates the notification processing. Thereafter, in the printing apparatus 10, the conditional maintenance operation is executed based on the contents determined in this notification processing.

Meanwhile, in the case where the CPU 216 determines that the continue button 910 is not selected in S812, the processing proceeds to S816, and the CPU 216 determines whether or not the cancel button 912 is selected. In the case where the CPU 216 determines that the cancel button 912 is not selected in S816, the processing returns to S812. Meanwhile, in the case where the CPU 216 determines that the cancel button 912 is selected in S816, the processing proceeds to S818, and the CPU 216 determines to cancel the maintenance operation, and terminates the notification processing. Thereafter, in the printing apparatus 10, the maintenance operation is cancelled based on the contents determined in this notification processing.

Meanwhile, in the case where the CPU 216 determines that the power feed amount from the USB interface 214 is not 7.5 W or more in S808, the processing proceeds to S820, and the CPU 216 displays a second notification screen 952 notifying that the operation cannot be executed, on the display portion 240 (see Fig. 9B). In the second notification screen 952, notification indicating that the power feed amount from the USB interface 214 is insufficient is made as an error message 954. Moreover, in the second notification screen 952, an instruction for enabling execution of the maintenance operation is illustrated as an instruction message 958, and for example, there is made notification prompting connection to an external power source by which the power feed amount from the USB interface 214 is increased.

Note that the instruction message 958 may cause the user to use a manual or a two-dimensional code to identify a recommended external power source, or may prompt connection with USB-BC and USB-PD with high power feed amounts. Moreover, a cancel button 962 is displayed in the second notification screen 952. In the case where the cancel button 962 is selected, cancelling of the maintenance operation is determined. As described above, in the second notification screen 952, the user is notified of insufficiency of the power feed amount as the power feed condition, and is also notified of the instruction for enabling execution of the maintenance operation as the information on the operation.

In the case where the second notification screen 952 is displayed on the display portion 240, the processing then proceeds to S822, and the CPU 216 determines whether or not the cancel button 962 is selected. In the case where the CPU 216 determines that the cancel button 962 is not selected in S822, the determination of S822 is performed again. Note that, in the case where the determination of S822 is repeatedly executed for a time period longer than a predetermined time period, the maintenance operation may be forcedly cancelled. Meanwhile, in the case where the CPU 216 determines that the cancel button 962 is selected in S822, the processing proceeds to S818.

### =Printing Operation and Reading Operation=

Next, notification processing executed at start of the printing operation and at start of the reading operation is explained. In the printing apparatus 10, in the case where an instruction to start the printing operation and the reading operation is given from the operation panel 208, there is executed notification processing in which whether or not to execute the operations is determined while notification of the power feed condition and the information on the operation is performed based on the supplied power.

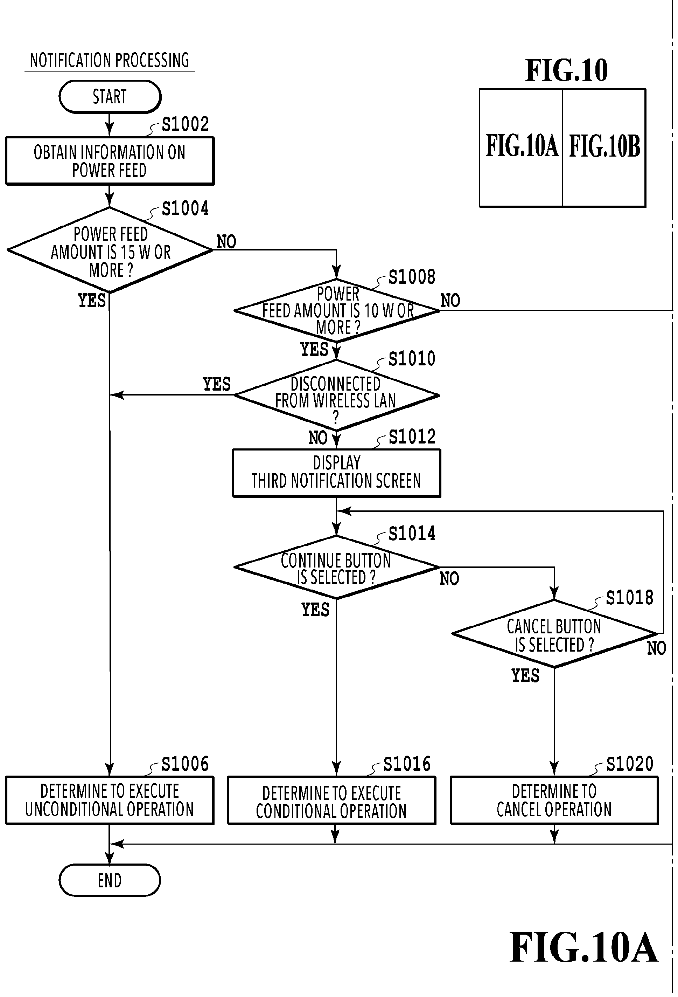

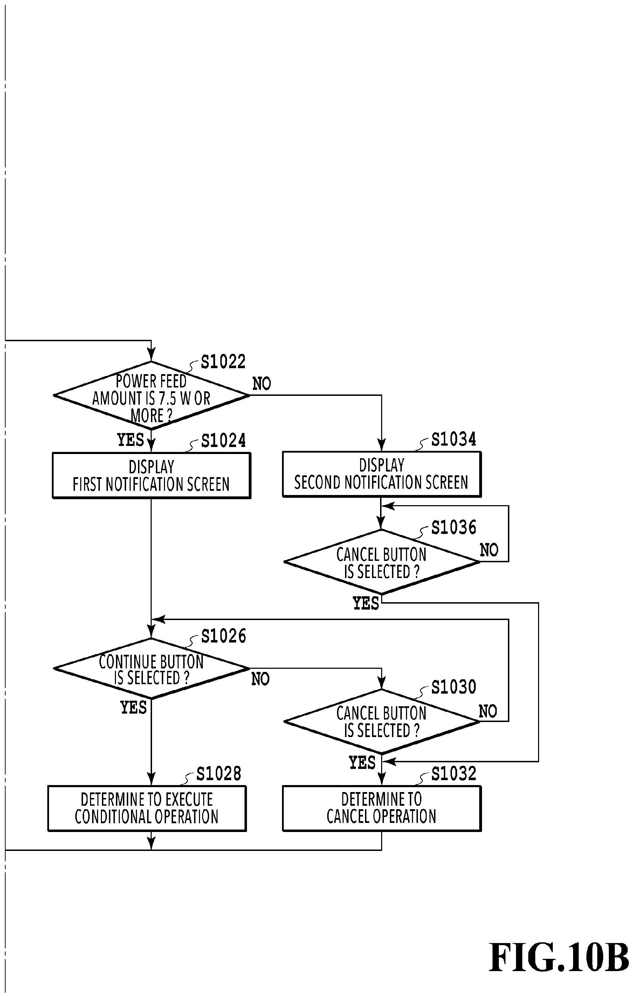

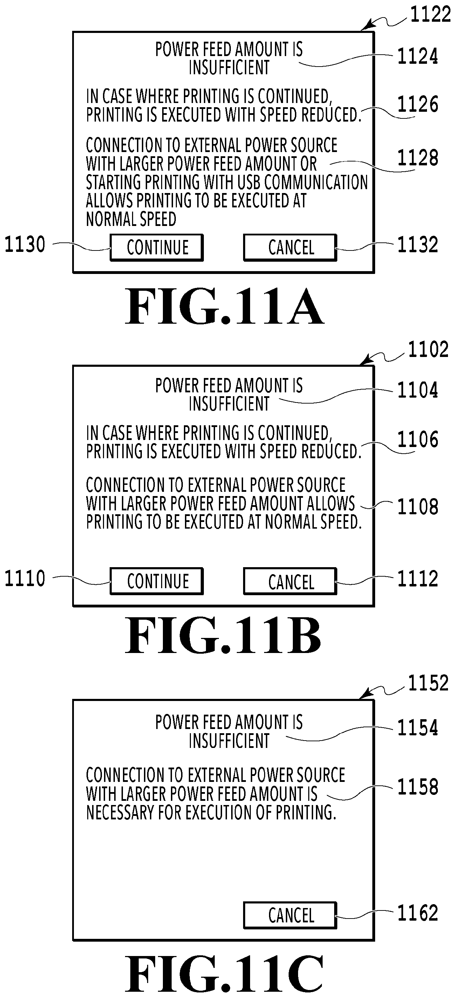

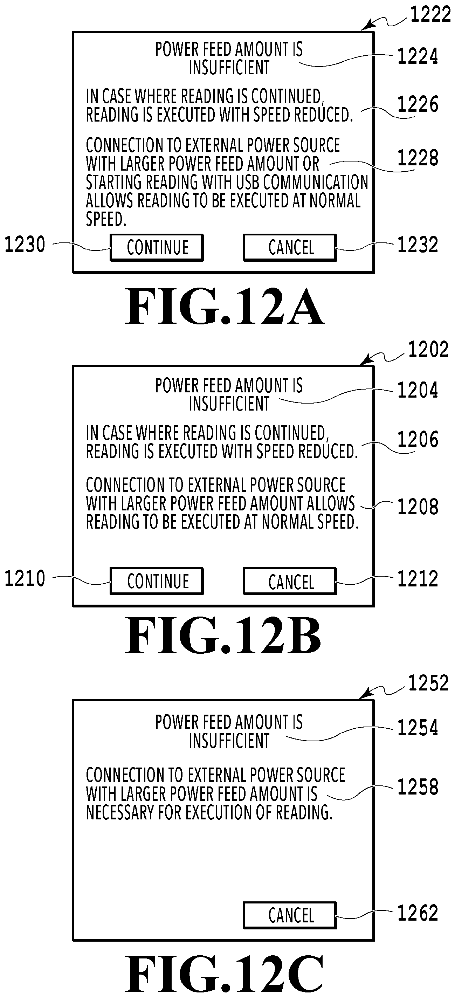

Fig. 10 is a flowchart illustrating detailed processing contents of the notification processing executed at the start of the printing operation and at the start of the reading operation. Figs. 11A to 11C illustrate examples of notification screens in the notification of the notification processing at the start of the printing operation. Fig. 11A illustrates a third notification screen notifying that the conditional operation is possible, Fig. 11B illustrates a first notification screen notifying that the conditional operation is possible, and Fig. 11C illustrates a second notification screen notifying that the operation is impossible. Figs. 12A to 12C illustrate examples of notification screens in the notification of the notification processing at the start of the reading operation. Fig. 12A illustrates a third notification screen notifying that the conditional operation is possible, Fig. 12B illustrates a first notification screen notifying that the conditional operation can be executed, and Fig. 12C illustrates a second notification screen notifying that the operation is impossible.

The CPU 216 performs the series of processes illustrated in the flowchart of Figs. 10A and 10B by loading a program code stored in the program memory 218 onto the data memory 220 and executing the program code. Alternatively, all or part of functions of the steps in Figs. 10A and 10B may be executed by hardware such as an ASIC or an electric circuit.

In the case where the notification processing of Figs. 10A and 10B is started, first, in S1002, the CPU 216 obtains the information on the power feed from the USB interface 214. Since specific processing contents of S1002 are the same as those of the above-mentioned S602, explanation thereof is omitted. Next, in S1004, the CPU 216 determines whether or not the power feed amount from the USB interface 214 is 15 W or more. Specific processing contents of S 1004 are the same as those of the above-mentioned S604. Note that, in the case where the table describing the execution performances is used in the process of S1004, the operation type of "printing operation" is referred to at the start of the printing operation, and the operation type of "reading operation" is referred to at the start of the reading operation.

In the case where the CPU 216 determines that the power feed amount from the USB interface 214 is 15 W or more in S 1004, the processing proceeds to S 1006, and the CPU 216 determines to execute the unconditional operation, and terminates the notification processing. Then, in the printing apparatus 10, in the case where this notification processing is started at the start of the printing processing, the unconditional printing operation is executed based on the contents determined in this notification processing. Meanwhile, in the printing apparatus 10, in the case where this notification processing is started at the start of the reading processing, the unconditional reading operation is executed based on the contents determined in this notification processing.

In the case where the CPU 216 determines that the power feed amount from the USB interface 214 is not 15 W or more in S 1004, the processing proceeds to S 1008, and the CPU 216 determines whether or not the power feed amount from the USB interface 214 is 10 W or more. Specific processing contents of S 1008 are the same as those of the above-mentioned S804. Note that, in the case where the table describing the execution performances is used in the process of S 1008, the operation type of "printing operation" is referred to at the start of the printing operation, and the operation type of "reading operation" is referred to at the start of the reading operation.

In the case where the CPU 216 determines that the power feed amount from the USB interface 214 is 10 W or more in S1008, the processing proceeds to S1010, and the CPU 216 determines whether or not the printing apparatus 10 is disconnected from the wireless LAN. In S1010, the near-field communication unit 212 is controlled to detect connection with another near-field communication terminal. As described above, in the present embodiment, for example, the near-field communication unit 212 functions as a connection portion for wireless connection between the printing apparatus 10 and the external apparatus. Moreover, in S1010, the CPU 216 may predict a power consumption amount of the operations executed in parallel with the printing operation and the reading operation such as the display of the display portion 240 and the USB communication in addition to the wireless LAN communication, and determine whether or not a total power consumption amount is equal to or larger than a set value. In this case, the processing proceeds to S1012 to be described later in the case where the total power consumption amount is equal to larger than the set value, and proceeds to S1006 in the case where the total power consumption amount is smaller than a set value. The setting value is a value set in advance, and is determined, for example, through experiments.

In the case where the CPU 216 determines that the printing apparatus 10 is disconnected from the wireless LAN, that is not connected to another near-field communication terminal in S1010, the processing proceeds to S1006. Meanwhile, in the case where the CPU 216 determines that the printing apparatus 10 is not disconnected from the wireless LAN, that is connected to another near-field communication terminal in S1010, the processing proceeds to S1012. In S1012, the CPU 216 displays a third notification screen notifying that the conditional operation is possible, on the display portion 240.

In the case where this notification processing is started at the start of the printing operation, in S1012, a third notification screen 1122 is displayed on the display portion 240 (see Fig. 11A). In the third notification screen 1122, notification indicating that the power feed amount from the USB interface 214 is insufficient is made as an error message 1124. Moreover, in the third notification screen 1122, notification indicating that the power feed amount from the USB interface 214 is insufficient and thus the printing operation can be executed with the speed reduced is made as an operation message 1126. Furthermore, in the third notification screen 1122, an instruction for enabling execution of the unconditional printing operation is illustrated as an instruction message 1128. As the instruction, for example, there is made notification prompting connection to an external power source by which the power feed amount from the USB interface 214 is increased or prompting execution of the printing operation with the USB communication. Moreover, a continue button 1130 and a cancel button 1132 are displayed in the third notification screen 1122. In the case where the continue button 1130 is selected, execution of the conditional printing operation is determined. Specifically, execution of the printing operation with the speed reduced is determined. Moreover, in the case where the cancel button 1132 is selected, cancelling of the printing operation is determined. As described above, in the third notification screen 1122, the user is notified of insufficiency of the power feed amount as the power feed condition, and is also notified of the execution of the conditional printing operation and the instruction for enabling execution of the unconditional printing operation as the information on the operation.

In the case where this notification processing is started at the start of the reading operation, in S1012, a third notification screen 1222 is displayed on the display portion 240 (see Fig. 12A). In the third notification screen 1222, notification indicating that the power feed amount from the USB interface 214 is insufficient is made as an error message 1224. Moreover, in the third notification screen 1222, notification indicating that the power feed amount from the USB interface 214 is insufficient and thus the reading operation can be executed with the speed reduced is made as an operation message 1226. Furthermore, in the third notification screen 1222, an instruction for enabling execution of the unconditional reading operation is illustrated as an instruction message 1228. As the instruction, for example, there is made notification prompting connection to an external power source by which the power feed amount from the USB interface 214 is increased or prompting execution of the reading operation with the USB communication. Moreover, a continue button 1230 and a cancel button 1232 are displayed in the third notification screen 1222. In the case where the continue button 1230 is selected, execution of the conditional reading operation is determined. Specifically, execution of the reading operation with the speed reduced is determined. Moreover, in the case where the cancel button 1232 is selected, cancelling of the reading operation is determined. As described above, in the third notification screen 1222, the user is notified of insufficiency of the power feed amount as the power feed condition, and is also notified of the execution of the conditional reading operation and the instruction for enabling execution of the unconditional reading operation as the information on the operation.

In the case where the third notification screen 1122 (1222) is displayed on the display portion 240, the processing then proceeds to S1014, and the CPU 216 determines whether or not the continue button 1130 (1230) is selected. In the case where the CPU 216 determines that the continue button 1130 (1230) is selected in S1014, the processing proceeds to S1016, and the CPU 216 determines to execute the conditional printing operation (reading operation), and terminates the notification processing. Thereafter, in the printing apparatus 10, the conditional printing operation or the conditional reading operation is executed based on the contents determined in this notification processing.

Meanwhile, in the case where the CPU 216 determines that the continue button 1130 (1230) is not selected in S1014, the processing proceeds to S1018, and the CPU 216 determines whether or not the cancel button 1132 (1232) is selected. In the case where the CPU 216 determines that the cancel button 1132 (1232) is not selected in S1018, the processing returns to S1014. Meanwhile, in the case where the CPU 216 determines that the cancel button 1132 (1232) is selected in S1018, the processing proceeds to S1020, and the CPU 216 determines to cancel the printing operation (reading operation), and terminates the notification processing. Thereafter, in the printing apparatus 10, the printing operation or the reading operation is cancelled based on the contents determined in this notification processing. Note that the printing apparatus 10 may be configured such that, after the cancelation of the printing operation (reading operation), wireless LAN setting is executed to automatically change the connection from wireless connection to wired connection via the USB cable.

Meanwhile, in the case where the CPU 216 determines that the power feed amount from the USB interface 214 is not 10 W or more in S1008, the processing proceeds to S 1022, and the CPU 216 determines whether or not the power feed amount from the USB interface 214 is 7.5 W or more. Specific processing contents of S1022 are the same as those of the above-mentioned S608. Note that, in the case where the table describing the execution performances is used in the process of S 1022, the operation type of "printing operation" is referred to at the start of the printing operation, and the operation type of "reading operation" is referred to at the start of the reading operation. In the case where the CPU 216 determines that the power feed amount from the USB interface 214 is 7.5 W or more in S1022, the processing proceeds to S1024, and the CPU 216 displays the first notification screen notifying that the conditional operation is possible, on the display portion 240.

In the case where this notification processing is started at start of the printing operation, in S1024, a first notification screen 1102 is displayed on the display portion 240 (see Fig. 11B). In the first notification screen 1102, notification indicating that the power feed amount from the USB interface 214 is insufficient is made as an error message 1104. Moreover, in the first notification screen 1102, notification indicating that the power feed amount from the USB interface 214 is insufficient and thus the printing operation can be executed with the speed reduced is made as an operation message 1106. Furthermore, in the first notification screen 1102, an instruction for enabling execution of the unconditional printing operation is illustrated as an instruction message 1108, and for example, there is made notification prompting connection to an external power source by which the power feed amount from the USB interface 214 is increased. Note that the instruction message 1108 may cause the user to use a manual or a two-dimensional code to identify a recommended external power source, or may prompt connection with USB-BC and USB-PD with high power feed amounts.

Moreover, a continue button 1110 and a cancel button 1112 are displayed in the first notification screen 1102. In the case where the continue button 1110 is selected, execution of the conditional printing operation is determined. Specifically, execution of the printing operation with the speed reduced is determined. Moreover, in the case where the cancel button 1112 is selected, cancelling of the printing operation is determined. As described above, in the first notification screen 1102, the user is notified of insufficiency of the power feed amount as the power feed condition, and is also notified of the execution of the conditional printing operation and the instruction for enabling execution of the unconditional printing operation as the information on the operation.

In the case where this notification processing is started at the start of the reading operation, in S1024, a first notification screen 1202 is displayed on the display portion 240 (see Fig. 12B). In the first notification screen 1202, notification indicating that the power feed amount from the USB interface 214 is insufficient is made as an error message 1204. Moreover, in the first notification screen 1202, notification indicating that the power feed amount from the USB interface 214 is insufficient and thus the reading operation can be executed with the speed reduced is made as an operation message 1206. Furthermore, in the first notification screen 1202, an instruction for enabling execution of the unconditional reading operation is illustrated as an instruction message 1208, and for example, there is made notification prompting connection to an external power source by which the power feed amount from the USB interface 214 is increased. Note that the instruction message 1208 may cause the user to use a manual or a two-dimensional code to identify a recommended external power source, or may prompt connection with USB-BC and USB-PD with high power feed amounts.

Moreover, a continue button 1210 and a cancel button 1212 are displayed in the first notification screen 1202. In the case where the continue button 1210 is selected, execution of the conditional reading operation is determined. Specifically, execution of the reading operation with the speed reduced is determined. Moreover, in the case where the cancel button 1212 is selected, cancelling of the reading operation is determined. As described above, in the first notification screen 1202, the user is notified of insufficiency of the power feed amount as the power feed condition, and is also notified of the execution of the conditional reading operation and the instruction for enabling execution of the unconditional reading operation as the information on the operation.

In the case where the first notification screen 1102 (1202) is displayed on the display portion 240, the processing then proceeds to S1026, and the CPU 216 determines whether or not the continue button 1110 (1210) is selected. In the case where the CPU 216 determines that the continue button 1110 (1210) is selected in S1026, the processing proceeds to S1028, and the CPU 216 determines to execute the conditional printing operation (reading operation), and terminates the notification processing. Thereafter, in the printing apparatus 10, the conditional printing operation or the conditional reading operation is executed based on the contents determined in this notification processing.

Meanwhile, in the case where the CPU 216 determines that the continue button 1110 (1210) is not selected in S1026, the processing proceeds to S1030, and the CPU 216 determines whether or not the cancel button 1112 (1212) is selected. In the case where the CPU 216 determines that the cancel button 1112 (1212) is not selected in S1030, the processing returns to S1026. Meanwhile, in the case where the CPU 216 determines that the cancel button 1112 (1212) is selected in S1030, the processing proceeds to S1032, and the CPU 216 determines to cancel the printing operation (reading operation), and terminates the notification processing. Thereafter, in the printing apparatus 10, the printing operation or the reading operation is cancelled based on the contents determined in this notification processing.

Meanwhile, in the case where the CPU 216 determines that the power feed amount from the USB interface 214 is not 7.5 W or more in S1022, the processing proceeds to S1034, and the CPU 216 displays the second notification screen notifying that the operation cannot be executed, on the display portion 240. In the case where this notification processing is started at the start of the printing operation, in S1034, a second notification screen 1152 is displayed on the display portion 240 (see Fig. 11C). In the second notification screen 1152, notification indicating that the power feed amount from the USB interface 214 is insufficient is made as an error message 1154. Moreover, in the second notification screen 1152, an instruction for enabling execution of the printing operation is illustrated as an instruction message 1158, and for example, there is made notification prompting connection to an external power source by which the power feed amount from the USB interface 214 is increased. Note that the instruction message 1158 may cause the user to use a manual or a two-dimensional code to identify a recommended external power source, or may prompt connection with USB-BC and USB-PD with high power feed amounts. Moreover, a cancel button 1162 is displayed in the second notification screen 1152. In the case where the cancel button 1162 is selected, cancelling of the printing operation is determined. As described above, in the second notification screen 1152, the user is notified of insufficiency of the power feed amount as the power feed condition, and is also notified of the instruction for enabling execution of the printing operation as the information on the operation.

In the case where this notification processing is started at start of the reading operation, in S1034, a second notification screen 1252 is displayed on the display portion 240 (see Fig. 12C). In the second notification screen 1252, notification indicating that the power feed amount from the USB interface 214 is insufficient is made as an error message 1254. Moreover, in the second notification screen 1252, an instruction for enabling execution of the reading operation is illustrated as an instruction message 1258, and for example, there is made notification prompting connection to an external power source by which the power feed amount from the USB interface 214 is increased. Note that the instruction message 1258 may cause the user to use a manual or a two-dimensional code to identify a recommended external power source, or may prompt connection with USB-BC and USB-PD with high power feed amounts. Moreover, a cancel button 1262 is displayed in the second notification screen 1252. In the case where the cancel button 1262 is selected, cancelling of the reading operation is determined. As described above, in the second notification screen 1252, the user is notified of insufficiency of the power feed amount as the power feed condition, and is also notified of the instruction for enabling execution of the reading operation as the information on the operation.

In the case where the second notification screen 1152 (1252) is displayed on the display portion 240, the processing then proceeds to S1036, and the CPU 216 determines whether or not the cancel button 1162 (1262) is selected. In the case where the CPU 216 determines that the cancel button 1162 (1262) is not selected in S1036, the determination of S1036 is performed again. Note that, in the case where the determination of S1036 is repeatedly executed for a time period longer than a predetermined time period, the printing operation (reading operation) may be forcedly cancelled. Meanwhile, in the case where the CPU 216 determines that the cancel button 1162 (1262) is selected in S1036, the processing proceeds to S1032.

### =Activation and Wireless LAN Setting=

Next, notification processing executed in activation of the printing apparatus 10 and in wireless LAN setting is explained. In the printing apparatus 10, notification processing of performing notification of the power feed condition and the information on the operation is started based on the power supplied in the activation of the printing apparatus 10 and the wireless LAN setting.

Note that the notification processing in the activation of the printing apparatus 10 is executed at a timing at which an activation button (not illustrated) provided in the operation panel 208 is selected and the printing apparatus 10 is activated. Specifically, for example, the notification processing may be executed after completion of initialization processing of the printing apparatus 10 executed just after the activation of the printing apparatus 10, or executed before the initialization processing. Alternatively, the notification processing may be executed at a timing at which the display portion 240 is activated in response to the activation of the printing apparatus 10. The notification processing in the wireless LAN setting may be executed before a timing at which an instruction to start the wireless LAN setting is inputted and the wireless LAN setting based on the instruction is executed or at a timing at which the wireless LAN setting based on the instruction is completed.

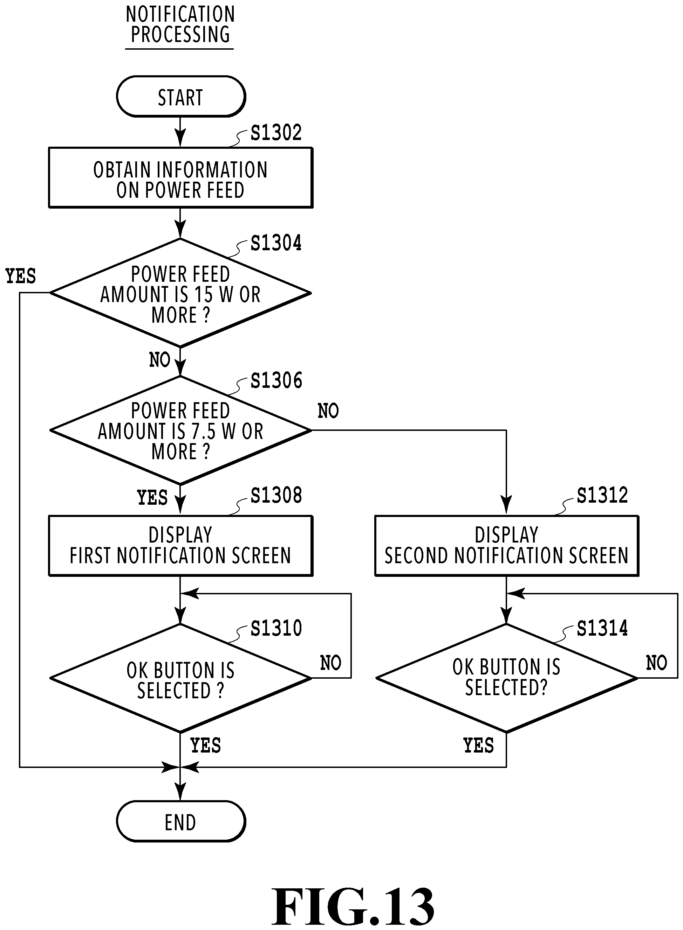

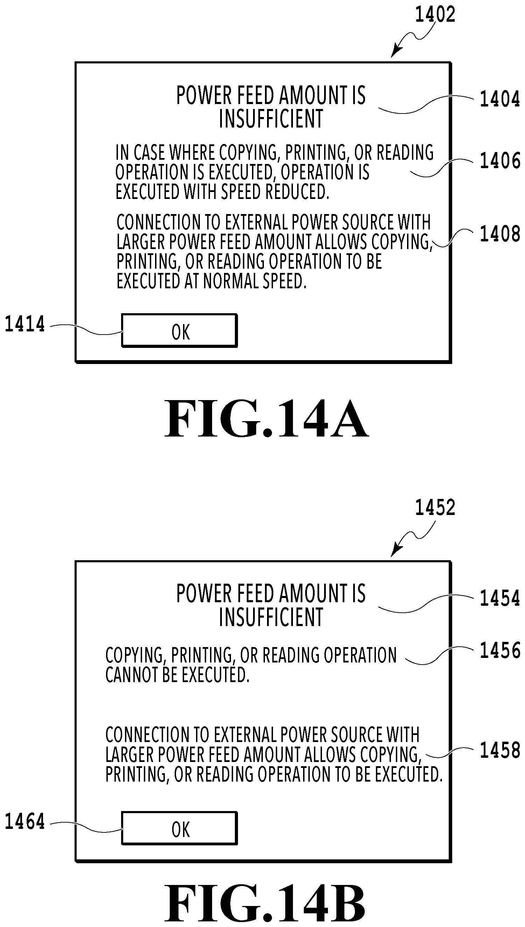

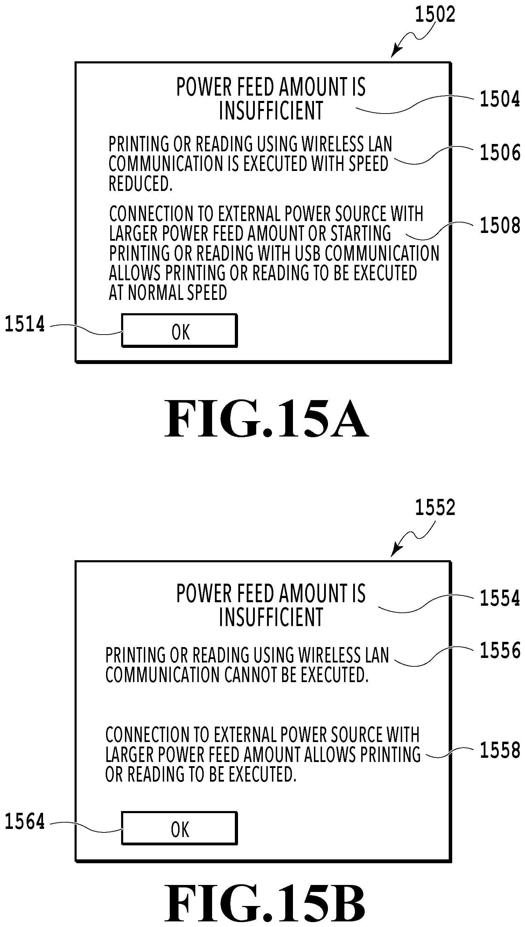

Fig. 13 is a flowchart illustrating detailed processing contents of the notification processing executed in the activation and the wireless LAN setting. Figs. 14A and 14B are diagrams illustrating examples of notification screens in the notification of the notification processing in the activation. Fig. 14A is a first notification screen notifying that the conditional operation is possible, and Fig. 14B is a second notification screen notifying that the operation is impossible. Figs. 15A and 15B are diagrams illustrating examples of notification screens in the notification of the notification processing in the wireless LAN setting. Fig. 15A illustrates a first notification screen notifying that the conditional operation is possible, and Fig. 15B is a second notification screen notifying that the operation is impossible.

The CPU 216 performs the series of processes illustrated in the flowchart of Fig. 13 by loading a program code stored in the program memory 218 onto the data memory 220 and executing the program code. Alternatively, all or part of functions of the steps in Fig. 13 may be executed by hardware such as an ASIC or an electric circuit.

In the case where the notification processing of Fig. 13 is started, first, in S1302, the CPU 216 obtains the information on the power feed from the USB interface 214. Since specific processing contents of S1302 are the same as those of the above-mentioned S602, explanation thereof is omitted. Next, in S1304, the CPU 216 determines whether or not the power feed amount from the USB interface 214 is 15 W or more. Specific processing contents of S1304 are the same as those of the above-mentioned S604. Note that, in the case where the table describing the execution performances is used in the process of S1304, the operation type of "operation panel display" is referred to in the activation, and the operation type of "wireless LAN communication" is referred in the wireless LAN setting.

In the case where the CPU 216 determines that the power feed amount from the USB interface 214 is 15 W or more in S1304, the CPU 216 terminates the notification processing without displaying the notification screen on the display portion 240. Meanwhile, in the case where the CPU 216 determines that the power feed amount from the USB interface 214 is not 15 W or more in S1304, the processing proceeds to S1306, and the CPU determines whether or not the power feed amount from the USB interface 214 is 7.5 W or more. Specific processing contents of S1306 are the same as those of the above-mentioned S608. Note that, in the case where the table describing the execution performances is used in the process of S1306, the operation type of "operation panel display" is referred to in the activation, and the operation type of "wireless LAN communication" is referred in the wireless LAN setting.

In the case where the CPU 216 determines that the power feed amount from the USB interface 214 is 7.5 W or more in S1306, the processing proceeds to S1308, and the CPU 216 displays a first notification screen notifying that the conditional operation is possible, on the display portion 240.

In the case where this notification processing is started in the activation, in S1308, a first notification screen 1402 is displayed on the display portion 240 (see Fig. 14A). In the first notification screen 1402, notification indicating that the power feed amount from the USB interface 214 is insufficient is made as an error message 1404. Moreover, in the first notification screen 1402, notification indicating that the power feed amount from the USB interface 214 is insufficient and thus the copying operation, the printing operation, and the reading operation can be executed with the speed reduced is made as an operation message 1406. Moreover, in the first notification screen 1402, an instruction for enabling execution of the unconditional copying operation, the unconditional printing operation, and the unconditional reading operation is illustrated as an instruction message 1408. In the instruction, for example, there is made notification prompting connection to an external power source by which the power feed amount from the USB interface 214 is increased. Note that the instruction message 1408 may cause the user to use a manual or a two-dimensional code to identify a recommended external power source, or may prompt connection with USB-BC and USB-PD with high power feed amounts.

Furthermore, an OK button 1414 is displayed in the first notification screen 1402. In the case where the OK button 1414 is selected, the CPU 216 determines that the user has checked the notification contents. As described above, in the first notification screen 1402, the user is notified of insufficiency of the power feed amount as the power feed condition. Moreover, in the first notification screen 1402, the user is also notified that the conditional copying operation, the conditional printing operation, and the conditional reading operation can be executed, and is notified of the instruction for enabling execution of the unconditional copying operation, the unconditional printing operation, and the unconditional reading operation as the information on the operation. Note that the operations for which the notification is performed in the first notification screen 1402 are not limited to the copying operation, the printing operation, and the reading operation. For example, the notification may be performed for all operation types whose words in the fields corresponding to the connection specification in the table describing the execution performances in the information on the power feed obtained in S1302 are "Δ", or may be performed for some of these operation types.

Moreover, in the case where this notification processing is started in the wireless LAN setting, in S1308, a first notification screen 1502 is displayed on the display portion 240 (see Fig. 15A). In the first notification screen 1502, notification indicating that the power feed amount from the USB interface 214 is insufficient is made as an error message 1504. Moreover, in the first notification screen 1502, notification indicating that the power feed amount from the USB interface 214 is insufficient and thus the printing operation and the reading operation using the wireless LAN communication can be executed with the speed reduced is made as an operation message 1506. Moreover, in the first notification screen 1502, an instruction for enabling execution of the unconditional printing operation and the unconditional reading operation using the wireless LAN communication is illustrated as an instruction message 1508. In the instruction, for example, there is made notification prompting connection to an external power source by which the power feed amount from the USB interface 214 is increased. Note that the instruction message 1508 may cause the user to use a manual or a two-dimensional code to identify a recommended external power source, or may prompt connection with USB-BC and USB-PD with high power feed amounts.

Furthermore, an OK button 1514 is displayed in the first notification screen 1502. In the case where the OK button 1514 is selected, the CPU 216 determines that the user has checked the notification contents. As described above, in the first notification screen 1502, the user is notified of insufficiency of the power feed amount as the power feed condition. Moreover, in the first notification screen 1502, the user is also notified that the conditional printing operation and the conditional reading operation can be executed, and is notified of the instruction for enabling execution of the unconditional printing operation and the unconditional reading operation as the information on the operation.

In the case where the first notification screen 1402 (1502) is displayed on the display portion 240, the processing then proceeds to S1310, and the CPU 216 determines whether or not the OK button 1414 (1514) is selected. In the case where the CPU 216 determines that the OK button 1414 (1514) is not selected in S13 10, the determination of S1310 is performed again. Note that, in the case where the determination of S1310 is repeatedly executed for a time period longer than a predetermined time period, display of the first notification screen 1402 (1502) on the display portion 240 may be terminated. Meanwhile, in the case where the CPU 216 determines that the OK button 1414 (1514) is selected in S1310, this notification processing is terminated.

In the case where the CPU 216 determines that the power feed amount from the USB interface 214 is not 7.5 W or more in S1306, the processing proceeds to S1312, and the CPU 216 displays the second notification screen notifying that the operation cannot be executed, on the display portion 240.

In the case where this notification processing is started in the activation, in S1312, a second notification screen 1452 is displayed on the display portion 240 (see Fig. 14B). In the second notification screen 1452, notification indicating that the power feed amount from the USB interface 214 is insufficient is made as an error message 1454. Moreover, in the second notification screen 1452, notification indicating that the power feed amount from the USB interface 214 is insufficient and thus the copying operation, the printing operation, and the reading operation cannot be executed is made as an operation message 1456. Furthermore, in the second notification screen 1452, an instruction for enabling execution of the copying operation, the printing operation, and the reading operation is illustrated as an instruction message 1458, and for example, there is made notification prompting connection to an external power source by which the power feed amount from the USB interface 214 is increased. Note that the instruction message 1458 may cause the user to use a manual or a two-dimensional code to identify a recommended external power source, or may prompt connection with USB-BC and USB-PD with high power feed amounts.

Furthermore, an OK button 1464 is displayed in the second notification screen 1452. In the case where the OK button 1464 is selected, the CPU 216 determines that the user has checked the notification contents. As described above, in the second notification screen 1452, the user is notified of insufficiency of the power feed amount as the power feed condition. Moreover, in the second notification screen 1452, the user is also notified that the copying operation, the printing operation, and the reading operation cannot be executed, and is notified of the instruction for enabling execution of the copying operation, the printing operation, and the reading operation as the information on the operation. Note that the operations for which the notification is performed in the second notification screen 1452 are not limited to the copying operation, the printing operation, and the reading operation. For example, the notification may be performed for all operation types whose words in the fields corresponding to the connection specification in the table describing the execution performances in the information on the power feed obtained in S1302 are "×", or may be performed for some of these operation types.

In the case where this notification processing is started in the wireless LAN setting, in S1312, a second notification screen 1552 is displayed on the display portion 240 (see Fig. 15B). In the second notification screen 1552, notification indicating that the power feed amount from the USB interface 214 is insufficient is made as an error message 1554. Moreover, in the second notification screen 1552, notification indicating that the power feed amount from the USB interface 214 is insufficient and thus the printing operation and the reading operation using the wireless LAN communication cannot be executed is made as an operation message 1556. Furthermore, in the second notification screen 1552, an instruction for enabling execution of the printing operation and the reading operation using the wireless LAN communication is illustrated as an instruction message 1558, and for example, there is made notification prompting connection to an external power source by which the power feed amount from the USB interface 214 is increased. Note that the instruction message 1558 may cause the user to use a manual or a two-dimensional code to identify a recommended external power source, or may prompt connection with USB-BC and USB-PD with high power feed amounts.

Furthermore, an OK button 1564 is displayed in the second notification screen 1552. In the case where the OK button 1564 is selected, the CPU 216 determines that the user has checked the notification contents. As described above, in the second notification screen 1552, the user is notified of insufficiency of the power feed amount as the power feed condition. Moreover, in the second notification screen 1552, the user is also notified that the printing operation and the reading operation using the wireless LAN communication cannot be executed, and is notified of the instruction for enabling execution of the printing operation and the reading operation using the wireless LAN communication as the information on the operation.

In the case where the second notification screen 1452 (1552) is displayed on the display portion 240, the processing then proceeds to S1314, and the CPU 216 determines whether or not the OK button 1464 (1564) is selected. In the case where the CPU 216 determines that the OK button 1464 (1564) is not selected in S1314, the determination of S1314 is performed again. Note that, in the case where the determination of S1314 is repeatedly executed for a time period longer than a predetermined time period, display of the second notification screen 1452 (1552) on the display portion 240 may be terminated. Meanwhile, in the case where the CPU 216 determines that the OK button 1464 (1564) is selected in S1314, this notification processing is terminated.

### <Operations and Effects>

As explained above, in the printing apparatus 10 according to the present embodiment, there is made the notification of the power feed condition and the information on the operation including the instruction for executing the operation. The information on the operation further includes information indicating that the conditional operation can be executed, depending on the power feed condition. The printing apparatus 10 can thereby allow the user to recognize not only that the operation cannot be performed but also that there is a measure against this situation and execution of the conditional operation is possible, depending on the supplied power. The usability is thus improved for the user.

Moreover, in the printing apparatus 10, the notification of the power feed condition and the information on the operation is made at the activation, the wireless LAN setting, the start of the copying operation, the start of the maintenance operation, the start of the printing operation, and the start of the reading operation. The printing apparatus 10 thereby allow the user to recognize the power feed condition and the information on the operation at various timings, and the usability is improved for the user.

### (Second Embodiment)

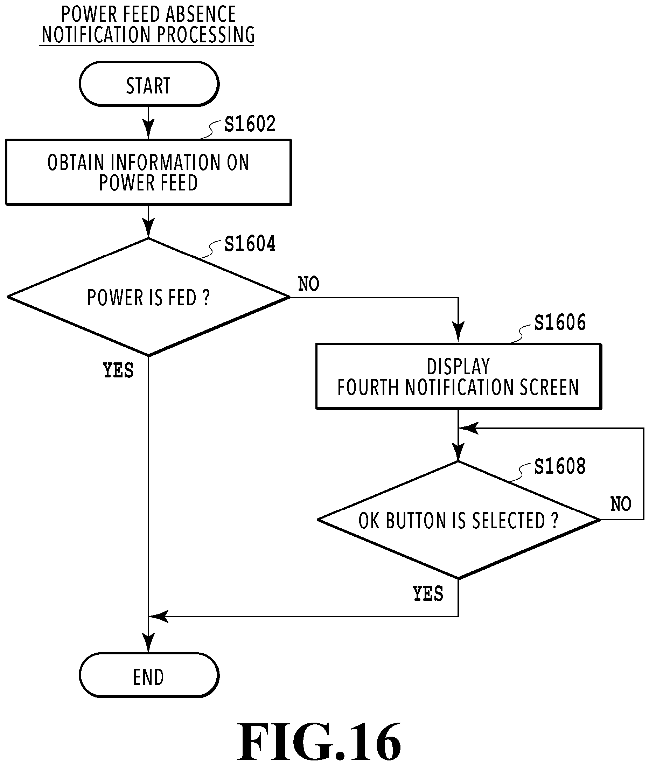

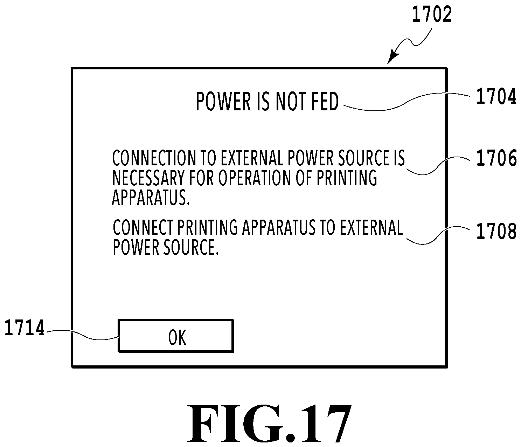

Next, a printing apparatus according to a second embodiment is explained with reference to Figs. 16 and 17. In the following explanation, the same reference numerals as those used in the first embodiment are used for configurations that are the same as or correspond to those in the printing apparatus according to the first embodiment described above, and detailed explanation of these configurations is omitted.

The second embodiment is different from the above-mentioned first embodiment in that, in the printing apparatus 10, power feed absence notification processing of notifying that the power feed via the USB cable is absent is executed in addition to the notification processing described above.

### <Power feed Absence Notification Processing>

In the printing apparatus 10 according to the present embodiment, the power feed absence notification processing capable of notifying that the power feed via the USB cable is absent is periodically executed after the activation. Note that the power feed absence notification processing is not limited to processing periodically executed after the activation, and may be executed before each operation, for example, before the notification processing of the first embodiment. Moreover, in the case where the power feed absence notification processing is periodically executed, if the user has been already notified of insufficiency of the power feed amount in the notification processing of the first embodiment, the CPU 216 may determine that the user has intentionally unplugged the USB cable, and refrain from performing the notification. Furthermore, since the power feed via the USB cable is assumed to be absent, power stored in the EDLC 302 is used for the power feed absence notification processing and display of a notification screen on the display portion 240 in the power feed absence notification processing.

Fig. 16 is a flowchart illustrating detailed processing contents of the power feed absence notification processing capable of notifying that the power feed via the USB cable is absent. Fig. 17 is a diagram illustrating an example of a fourth notification screen performing notification in the power feed absence notification processing. The CPU 216 performs the series of processes illustrated in the flowchart of Fig. 16 by loading a program code stored in the program memory 218 onto the data memory 220 and executing the program code. Alternatively, all or part of functions of the steps in Fig. 16 may be executed by hardware such as an ASIC or an electric circuit.

In the case where the power feed absence notification processing is started, first, in S 1602, the CPU 216 obtains the information on the power feed. Since specific processing contents of S 1602 are the same as those of the above-mentioned S602, explanation thereof is omitted. Next, in S1604, the CPU 216 determines whether or not power is fed from the USB interface 214, that is power is fed from the USB cable connected to the USB interface 214. In S1604, the CPU 216 determines that power is fed from the USB interface 214 in the case where the connection specification, the current value, and the maximum power that are the information on the power feed are obtained in S 1602, and determines that power is not fed from the USB interface 214 in the case where the connection specification, the current value, and the maximum power are not obtained.

In the case where the CPU 216 determines that power is fed from the USB interface 214 in S1604, the CPU 216 terminates the power feed absence notification processing without performing display of the notification screen on the display portion 240. Meanwhile, in the case where the CPU 216 determines that power is not fed from the USB interface 214 in S1604, the processing proceeds to S1606, and the CPU 216 displays a fourth notification screen 1702 on the display portion 240 (see Fig. 17).

In the fourth notification screen 1702, notification indicating that power is not fed is made as an error message 1704. Moreover, in the fourth notification screen 1702, notification indicating that the printing apparatus 10 cannot be operated due to absence of power feed from the USB interface 214 is made as an operation message 1706. Furthermore, in the fourth notification screen 1702, an instruction for enabling operation of the printing apparatus 10 is illustrated as an instruction message 1708, and for example, notification prompting connection to an external power source is made. Moreover, an OK button 1714 is displayed in the fourth notification screen 1702. In the case where the OK button 1714 is selected, the CPU 216 determines that the user has checked the notification contents. As described above, in the fourth notification screen 1702, the user is notified of absence of the power feed as the power feed condition. Moreover, the user is notified that the printing apparatus 10 cannot operate, and is notified of the instruction for enabling the operation of the printing apparatus 10 as the information on the operation.

In the case where the fourth notification screen 1702 is displayed on the display portion 240, the processing then proceeds to S1608, and the CPU 216 determines whether or not the OK button 1714 is selected. In the case where the CPU 216 determines that the OK button 1714 is not selected in S1608, the determination of S1608 is performed again. Meanwhile, in the case where the CPU 216 determines that the OK button 1714 is selected in S1608, the power feed absence notification processing is terminated. In this case, the display of the fourth notification screen 1702 is terminated in the display portion 240.

### <Operations and Effects>

As explained above, in the printing apparatus 10 according to the present embodiment, the power feed absence notification processing is performed to display the fourth notification screen 1702 notifying that power feed via the USB cable is absent. In the fourth notification screen 1702, there is made notification of absence of the power feed and the information on the operation including the instruction for enabling the operation of the printing apparatus. The printing apparatus 10 can thereby allow the user to recognize absence of the power feed via the USB cable, that is disconnection from the external power source, and the usability is improved for the user.

### (Third Embodiment)

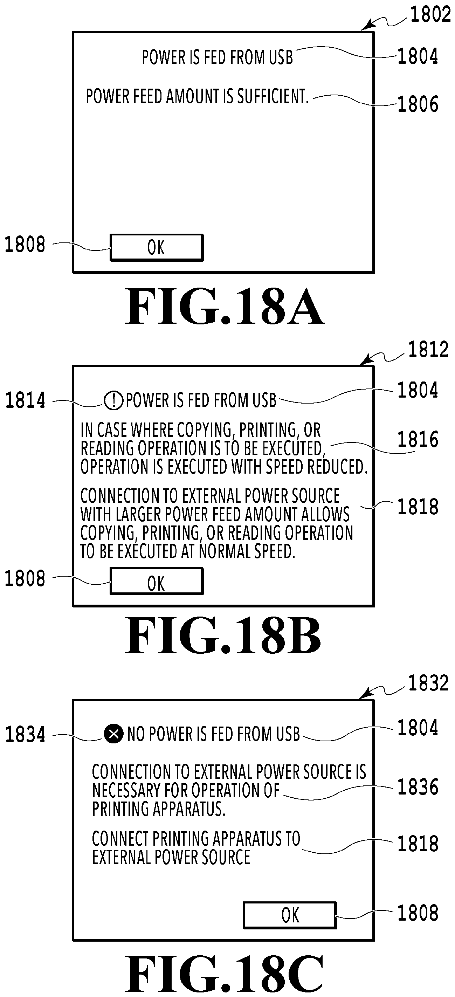

Next, a printing apparatus according to a third embodiment is explained with reference to Figs. 18A to 18C. In the following explanation, the same reference numerals as those used in the first embodiment are used for configurations that are the same as or correspond to those in the printing apparatus according to the first embodiment described above, and detailed explanation of these configurations is omitted.

The third embodiment is different from the above-mentioned first embodiment in that, in the printing apparatus 10, notification of the power feed condition and the information on the operation can be made at a timing desired by the user, in addition to the notification in the above-mentioned notification processing.

In the printing apparatus 10 according to the present embodiment, in the case where an instruction to check the power feed to the printing apparatus 10 is given by an operation on the operation panel 208, notification of a power feed notification screen is made on the display portion 240. Figs. 18A to 18C display examples of the power feed notification screen. Fig. 18A is a screen in the notification in the state where power equal to or more than a predetermined amount is fed, Fig. 18B is a screen in the notification in a state where power less than the predetermined amount is fed and Fig. 18C is a screen in the notification in a state where no power is fed. Note that display contents in the power feed notification screen are assumed to be based on the information on the power feed at a timing at which the instruction to check the power feed is given. The information on the power feed is obtained by the same process as that in the above-mentioned S602.

In the case where the printing apparatus 10 is in the state where power equal to or more than the predetermined amount is supplied thereto via the USB cable, a power feed notification screen 1802 is displayed on the display portion 240 (see Fig. 18A). In the power feed notification screen 1802, notification indicating that power is fed from the USB interface 214 is made as a power feed state message 1804. Note that the predetermined amount is assumed to be, for example, 7.5 W in the present embodiment. Moreover, in the power feed notification screen 1802, notification indicating that power of the predetermined amount or more is fed is made as a power feed sufficient message 1806. Furthermore, an OK button 1808 is displayed in the power feed notification screen 1802. In the case where the OK button 1808 is selected, the CPU 216 determines that the user has checked the notification contents, and terminates the display of the power feed notification screen 1802.

In the case where the printing apparatus 10 is in the state where power less than the predetermined amount is supplied thereto via the USB cable, a power feed notification screen 1812 is displayed on the display portion 240 (see Fig. 18B). In the power feed notification screen 1812, notification indicating that power is fed from the USB interface 214 is made as the power feed state message 1804. Moreover, in the power feed notification screen 1812, there is made notification of a power feed insufficient icon 1814 displayed near the power feed state message 1804 and indicating that the power feed amount is less than the predetermined amount. Furthermore, in the power feed notification screen 1812, notification indicating that the power from the USB interface 214 is insufficient and thus the copying operation, the printing operation, and the reading operation can be executed with the speed reduced is made as a power feed insufficient message 1816.

Moreover, in the power feed notification screen 1812, an instruction for enabling execution of the unconditional copying operation, the unconditional printing operation, and the unconditional reading operation is illustrated as an instruction message 1818. In the instruction, for example, there is made notification prompting connection to an external power source by which the power feed amount from the USB interface 214 is increased. Note that the instruction message 1818 may cause the user to use a manual or a two-dimensional code to identify a recommended external power source, or may prompt connection with USB-BC and USB-PD with high power feed amounts. Furthermore, the OK button 1808 is displayed in the power feed notification screen 1812. In the case where the OK button 1808 is selected, the CPU 216 determines that the user has checked the notification contents, and terminates the display of the power feed notification screen 1812.

As described above, in the power feed notification screen 1812, the user is notified that power is fed, and the icon indicating insufficiency of the power feed amount is displayed as the power feed condition. Moreover, in the power feed notification screen 1812, the user is notified that the conditional copying operation, the conditional printing operation, and the conditional reading operation can be executed, and is notified of the instruction for enabling execution of the unconditional copying operation, the unconditional printing operation, and the unconditional reading operation as the information on the operation.

In the case where the printing apparatus 10 is in the state where power is not fed thereto via the USB cable, a power feed notification screen 1832 is displayed on the display portion 240 (see Fig. 18C). In the power feed notification screen 1832, notification indicating that power is not fed from the USB interface 214 is made as the power feed state message 1804. Moreover, in the power feed notification screen 1832, there is made notification of a power feed absent icon 1834 displayed near the power feed state message 1804 and indicating that power is not fed. Furthermore, in the power feed notification screen 1832, notification indicating that the operation of the printing apparatus 10 is impossible unless power is fed by connecting the USB cable is made as a power feed absent message 1836.

Moreover, in the power feed notification screen 1832, an instruction for enabling the operation of the printing apparatus 10 is illustrated as the instruction message 1818, and for example, there is made notification prompting connection to an external power source. Furthermore, the OK button 1808 is displayed in the power feed notification screen 1832. In the case where the OK button 1808 is selected, the CPU 216 determines that the user has checked the notification contents, and terminates the display of the power feed notification screen 1832.

As described above, in the power feed notification screen 1832, the user is notified that power is not fed, and the icon indicating that power is not fed is displayed as the power feed condition. Moreover, in the power feed notification screen 1832, the user is notified that the operation of the printing apparatus 10 is impossible, and is notified of the instruction for enabling the operation of the printing apparatus 10 as the information on the operation.

### <Operation and Effects>

As explained above, in the printing apparatus 10 according to the present embodiment, the power feed notification screen that enables checking of the power feed to the printing apparatus 10 is displayed in the case where the power feed check instruction is inputted. In the power feed notification screen, notification of the icon depending on the power feed condition and the information on the operation including the instruction for enabling execution of the operation is made together with the notification of presence or absence of the power feed. The printing apparatus 10 can thereby allow the user to check the state of power feed to the printing apparatus 10 via the USB cable at a desired timing, and the usability is improved for the user.

### (Fourth Embodiment)

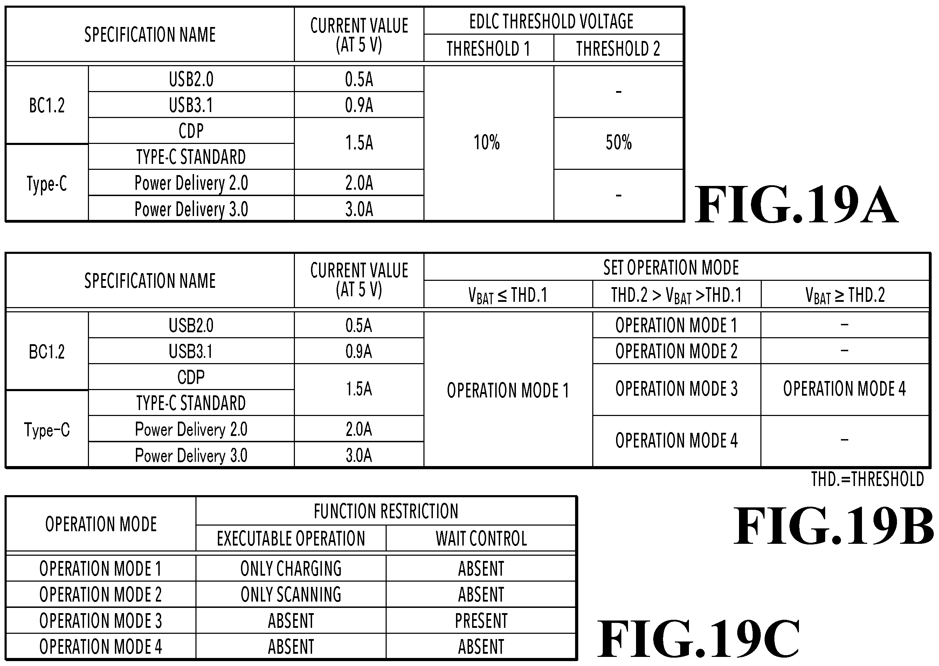

Next, a printing apparatus according to a fourth embodiment is explained with reference to Figs. 19A to 23C. In the following explanation, the same reference numerals as those used in the first embodiment are used for configurations that are the same as or correspond to those in the printing apparatus according to the first embodiment described above, and detailed explanation of these configurations is omitted.

Figs. 19A to 19C are diagrams illustrating relationships among the USB power feed amount, the voltage V_{BAT}, and operation modes. The contents of this table may be held in the program memory 218 as table data or implemented as a program code.

Fig. 19A is a table for determining thresholds of the voltage V_{BAT} depending on the USB power feed amount. Standards for setting the thresholds of the voltage V_{BAT} are as follows. For example, a threshold 1 is set to a voltage threshold at which the capping operation of the printing head can be performed by using only the power remaining in the EDLC 302 even if the USB power feed stops. A threshold 2 is set to a value at which one operation of a job (copying operation, printing operation) can be completed before the power in the EDLC 302 reaches the threshold 1 in the case where the USB power feed amount is not a power feed amount sufficient to maintain the operation and the power in the EDLC 302 decreases in response to execution of the job by the printing apparatus 10.

Fig. 19B is a diagram illustrating the operation modes determined based on the voltage V_{BAT} and the USB power feed amount. Moreover, Fig. 19C is a diagram illustrating function restrictions depending on each operation mode.

The operation modes are set such that the function restriction is provided in each mode with an operation mode 4 in which a normal operation is performed (all operations are possible) being a reference. For example, in an operation mode 1, the printing operation and the reading operation cannot be executed, and only the charging of the EDLC 302 is possible. In an operation mode 2, the printing operation cannot be performed, and only the reading operation is possible. In an operation mode 3, the printing operation can be performed, but control is performed in the middle of the printing operation, and the operation speed is reduced.

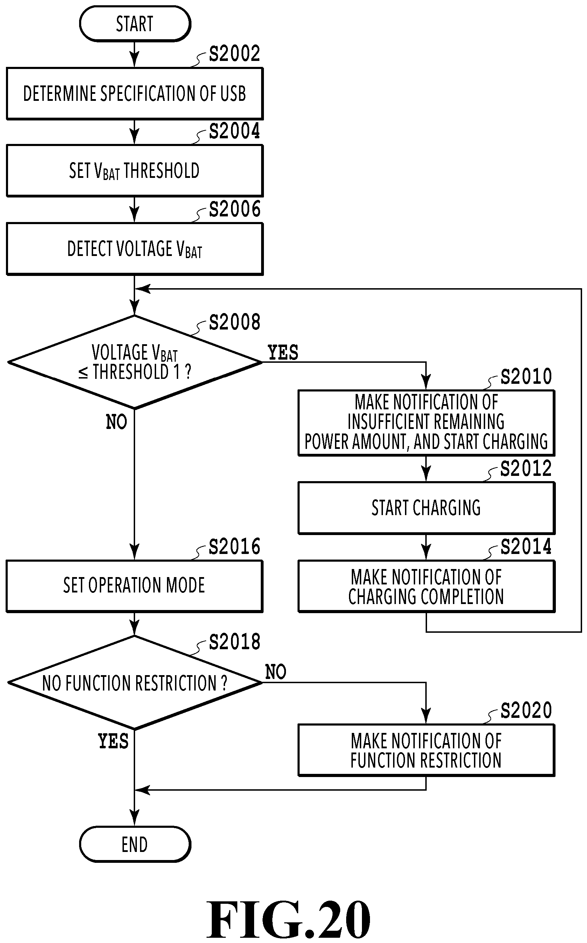

Fig. 20 is a flowchart illustrating processing contents in the activation of the printing apparatus 10 according to the present embodiment. The ASIC 314 implements this processing by executing a control program stored in the ROM 316 or the like. Moreover, the same applies to the following flowcharts. Furthermore, this processing is started in the case where a USB connector is plugged into the printing apparatus 10.

First, in step S2002, the ASIC 314 determines a specification of the USB.

In step S2004, the ASIC 314 sets the thresholds of the voltage V_{BAT} by using the table illustrated in Fig. 19A, based on the determination result of step S2002.

In step S2006, the ASIC 314 detects a value of the voltage V_{BAT} via the charger IC 304.

In step S2008, the ASIC 314 determines whether or not the voltage V_{BAT} detected in step S2006 is equal to or lower than the threshold 1 (equal or lower than the threshold). In the case where the voltage V_{BAT} is equal to or lower than the threshold 1, the ASIC 314 causes the processing to proceed to step S2010. In the case where the voltage V_{BAT} is higher than the threshold 1, the ASIC 314 causes the processing to proceed to step S2016.

In step S2010, the ASIC 314 notifies the user that the remaining power is insufficient and the charging is to be started.

In step S2012, the ASIC 314 starts the charging of the EDLC 302.

In the case where the charging is completed, in step S2014, the ASIC 314 notifies the user of completion of the charging of the EDLC 302.

Meanwhile, in step S2016, the ASIC 314 sets the operation mode by using the table of Fig. 19B based on the determination result of the specification of the USB determined in step S2002 and the voltage V_{BAT} detected in step S2006.

In step S2018, the ASIC 314 determines whether or not there is a function restriction for the set operation mode. In the case where there is a function restriction based on the table illustrated in Fig. 19C, the ASIC 314 causes the processing to proceed to step S2020. If not, the operation of the present flow is terminated.

In step S2020, the ASIC 314 notifies the user of contents of the function restriction.

Such processing allows the user to know whether or not the printing apparatus 10 can operate and whether or not there is a function restriction for the operation.

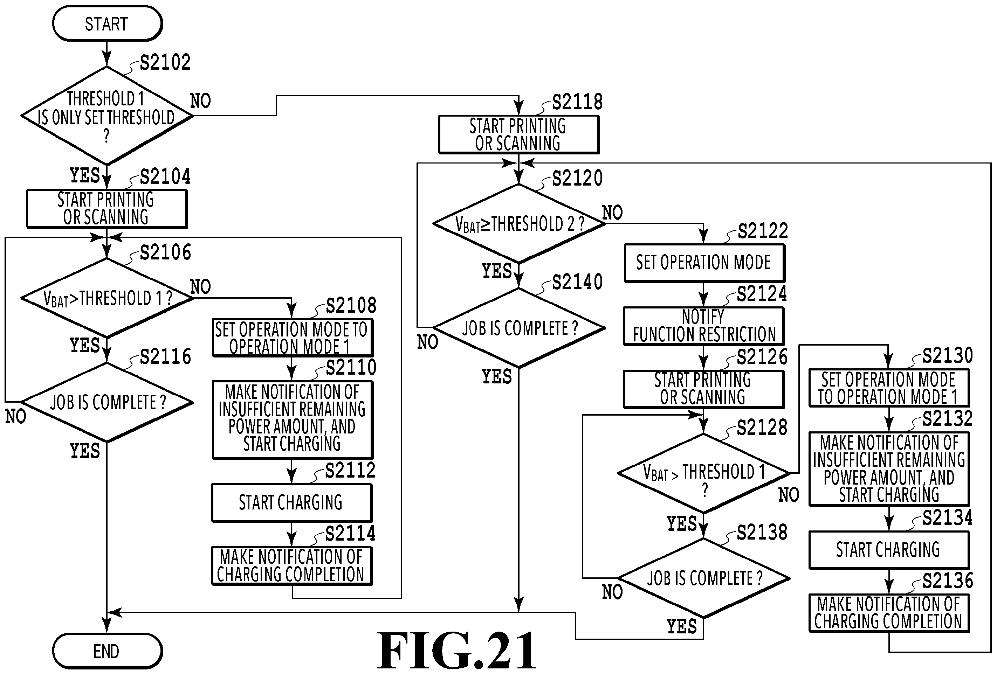

Fig. 21 is a flowchart illustrating processing contents from the start to the end of the job in the present embodiment. This processing is started in the case where the printing apparatus 10 receives the job from the user.

In step S2102, the ASIC 314 determines whether or not only the threshold 1 is set as the threshold of the voltage V_{BAT}. In the case where only the threshold 1 is set, the ASIC 314 causes the processing to proceed to step S2104. If not, the ASIC 314 causes the processing to proceed to step S2118.

In step S2104, the ASIC 314 starts a print or scan job.

During the execution of the job, the ASIC 314 constantly detects the voltage V_{BAT}, and compares the voltage V_{BAT} with the threshold 1 in step S2106. In the case where the voltage V_{BAT} is higher than the threshold 1, the ASIC 314 causes the processing to proceed to step S2116. In the case where the voltage V_{BAT} is equal to or lower than the threshold 1, the ASIC 314 causes the processing to proceed to step S2108.

In step S2116, the ASIC 314 determines whether or not the job is completed. In the case where the job is completed, the ASIC 314 terminates the present flow. In the case where the job is not completed, the ASIC 314 causes the processing to return to step S2106, and continues execution of the job. Specifically, in the case where the voltage V_{BAT} does not fall below the threshold 1 during the execution of the job, the job can be completed.

Meanwhile, in step S2108, the ASIC 314 stops the operation of the printing apparatus 10, and sets the operation mode to the operation mode 1.

In step S2110, the ASIC 314 notifies the user that the remaining power is insufficient and the charging is to be started.

In step S2112, the ASIC 314 starts the charging of the EDLC 302.

In the case where the charging is completed, in step S2114, the ASIC 314 notifies the user of the completion of the charging of the EDLC 302. Then, the processing returns to step S2106, and the job is resumed.

In the case where a threshold other than the threshold 1 is set as the threshold of the voltage V_{BAT} in step S2102, the ASIC 314 causes the processing to proceed to step S2118, and starts the print or scan job. In this case, in the present embodiment, the threshold 2 is assumed to be set in addition to the threshold 1.

During the execution of the job, the ASIC 314 constantly detects the voltage V_{BAT}, and compares the voltage V_{BAT} with the threshold 2 in step S2120. In the case where the voltage V_{BAT} is equal to or higher than the threshold 2 (equal to or higher than the threshold), the ASIC 314 causes the processing to proceed to step S2140. In the case where the voltage V_{BAT} is lower than the threshold 2, the ASIC 314 causes the processing to proceed to step S2122.

In step S2140, the ASIC 314 determines whether or not the job is completed. In the case where the job is completed, the ASIC 314 terminates the present flow. In the case where the job is not completed, the ASIC 314 causes the processing to return to step S2120, and continues execution of the job. Specifically, in the case where the voltage V_{BAT} does not fall below the threshold 2 during the execution of the job, the job can be completed.

Meanwhile, in step S2122, the ASIC 314 stops the operation of the printing apparatus 10, and resets the operation mode based on the table of Fig. 19B.

In step S2124, the ASIC 314 notifies the user that the function is restricted. For example, in the case where the operation mode is set from the operation mode 4 to the operation mode 3, delay in printing time is notified.

In step S2126, the ASIC 314 resumes the print or scan job.

During the execution of the job, the ASIC 314 constantly detects the voltage V_{BAT}, and compares the voltage V_{BAT} with the threshold 1 in step S2128. In the case where the voltage V_{BAT} is higher than the threshold 1, the ASIC 314 causes the processing to proceed to step S2138. In the case where the voltage V_{BAT} is equal to or lower than the threshold 1, the ASIC 314 causes the processing to proceed to step S2130.

In step S2138, the ASIC 314 determines whether or not the job is completed. In the case where the job is completed, the ASIC 314 terminates the present flow. In the case where the job is not completed, the ASIC 314 causes the processing to return to step S2128, and continues execution of the job. Specifically, in the case where the voltage V_{BAT} does not fall below the threshold 1 during the execution of the job, the job can be completed.

Meanwhile, in step S2130, the ASIC 314 stops the operation of the printing apparatus 10, and sets the operation mode to the operation mode 1.

In step S2132, the ASIC 314 notifies the user that the remaining power is insufficient and the charging is to be started.

In step S2134, the ASIC 314 starts the charging of the EDLC 302.

In the case where the charging is completed, in step S2136, the ASIC 314 notifies the user of the completion of the charging of the EDLC 302. Then, the processing returns to step S2120, and the job is resumed.

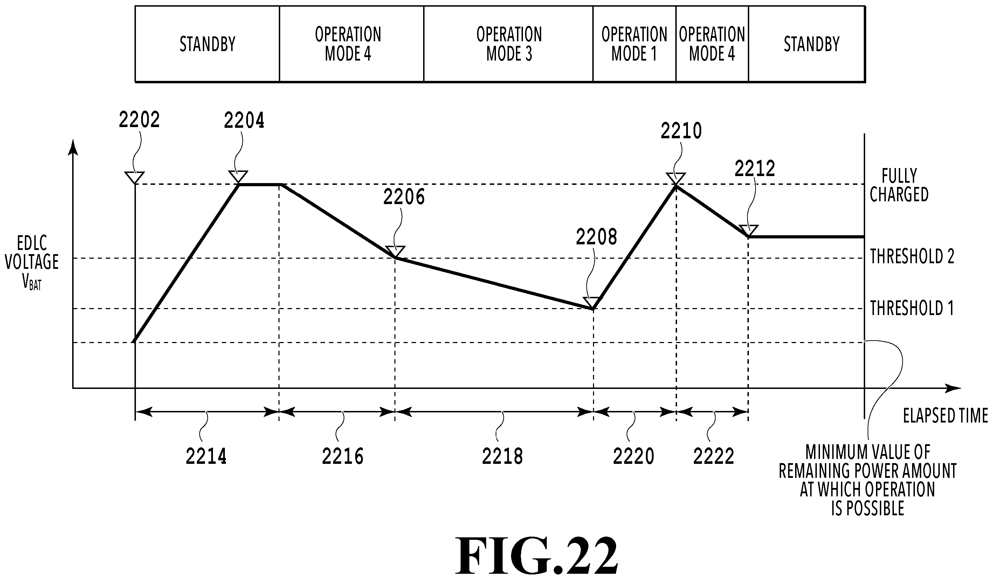

Fig. 22 is a diagram illustrating relationships among elapsed time, a voltage change in the EDLC 302, and notification timings in a series of processes from the activation to the job completion. In this example, the processing is assumed to start from a state where the EDLC 302 is uncharged and a connector of a USB Type-C specification (power feed of 1.5 A) is connected.

First, in the case where the USB connector is plugged in and the USB power feed is started, the printing apparatus 10 goes into a standby state, and notification 2202 notifies the user that the remaining power amount of the EDLC 302 is insufficient, the charging is to be started, and there is a possibility of the printing speed being reduced. Then, in the case where the charging of the EDLC 302 progresses and the EDLC 302 is fully charged, the operation mode of the printing apparatus 10 is changed to the operation mode 4. Next, notification 2204 notifies the user that reception of the job is possible, and the printing apparatus 10 starts receiving the job. A period up to this point is a section 2214.

Next, in the case where the job is started, the voltage of the EDLC 302 gradually decreases. In the case where the voltage V_{BAT} of the EDLC 302 reaches the threshold 2 before completion of the job, notification 2206 notifies the user that the function restriction is applied, and the operation mode is changed to the operation mode 3. A period up to this point is a section 2216.

After the changing of the operation mode to the operation mode 3, the job is resumed, and in the case where the voltage V_{BAT} of the EDLC 302 reaches the threshold 1 before the completion of the job, the operation of the printing apparatus 10 is stopped, and the operation mode is changed to the operation mode 1. Then, notification 2208 notifies the user of insufficiency of the remaining power amount of the power feed and start of charging, and the charging of the EDLC 302 is started. A period up to this point is a section 2218.

Then, in the case where the charging progresses and is completed, the printing apparatus 10 changes the operation mode to the operation mode 4, notifies the user of resuming of the job by performing notification 2210, and resumes the job. A period up to this point is a section 2220.

In the case where the job is completed, notification 2212 notifies the user of completion of the job. A period up to this point is a section 2222.

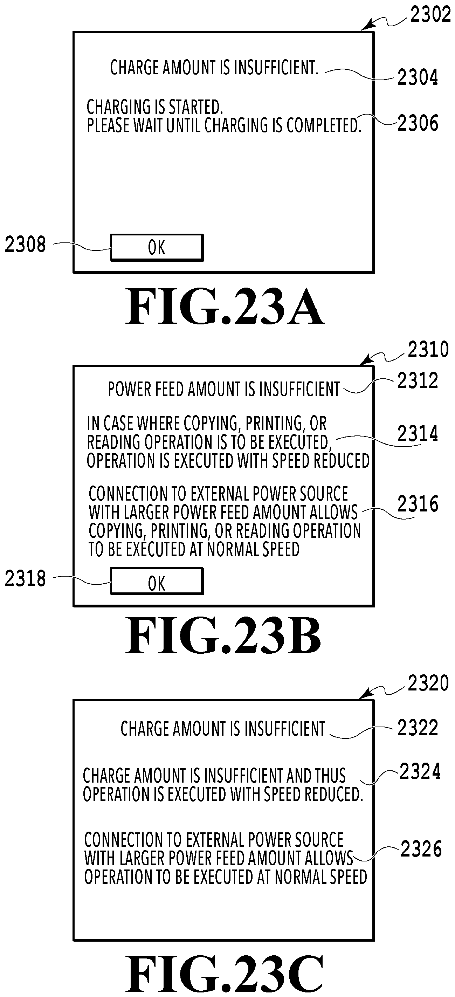

Fig. 23A to 23C are diagram illustrating examples of notification screens displayed to the user in the case where the functions are restricted.

Fig. 23A illustrates an example of the notification screen displayed in the case where the remaining power amount of the EDLC 302 in the activation is insufficient.

In a charge amount insufficient screen 2302, notification of the following information is made. An error message 2304 indicates that the charge amount of the EDLC 302 is insufficient. An operation message 2306 notifies that the charge amount is insufficient and thus charging is necessary (charging is being performed). In the case where an OK button 2308 is pressed, the charging operation is performed.

Fig. 23B illustrates an example of the notification screen displayed in the case where the power feed amount in the activation is insufficient.

In a power feed amount insufficient screen 2310, notification of the following information is made. An error message 2312 indicates that the USB power feed amount is insufficient. An operation message 2314 notifies that the power feed amount is insufficient and thus the execution speed of the operation needs to be reduced. An instruction message 2316 prompts connection to an external power source with a high USB power feed amount. The instruction message 2316 may cause the user to read a QR code or check a manual to know a recommended external power source. Moreover, the instruction message 2316 may prompt connection with USB-BC and USB-PD with high power feed amounts. In the case where an OK button 2318 is pressed, the operation is performed.

Fig. 23C illustrates an example of the notification screen displayed in the case where the remaining power amount of the EDLC 302 during the operation is insufficient.

In a charge amount insufficient screen 2320, notification of the following information is made. An error message 2322 indicates that the charge amount of the EDLC 302 is insufficient. An operation message 2324 notifies that the charge amount is insufficient and thus the execution speed of the operation needs to be reduced. An instruction message 2326 prompts connection to an external power source with a higher USB power feed amount.

Performing the control as described above allows the user to grasp that the power feed amount is insufficient, the charge amount is insufficient, and the operation speed is reduced, and also allows the user to grasp that connection to an external apparatus with a higher power feed amount is necessary.

### (Fifth Embodiment)

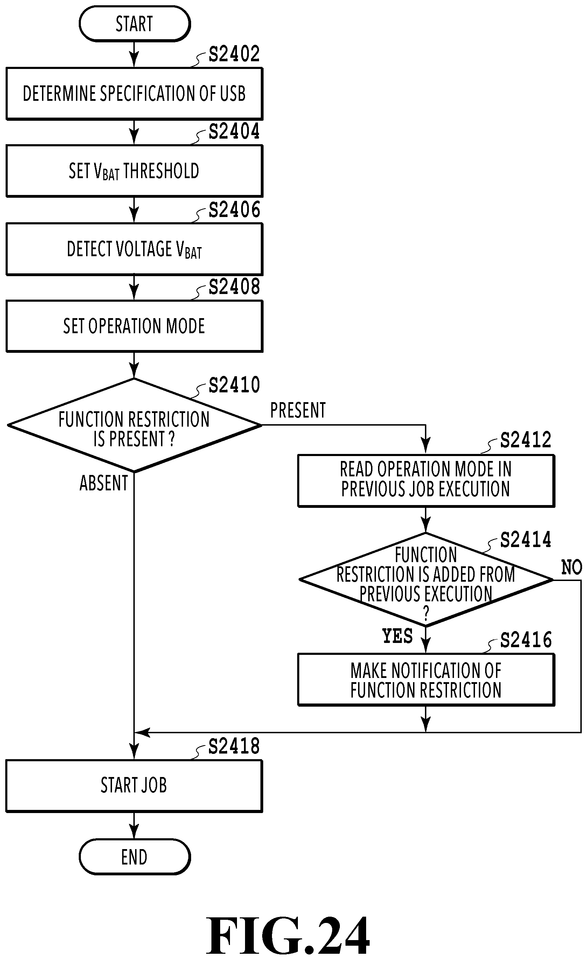

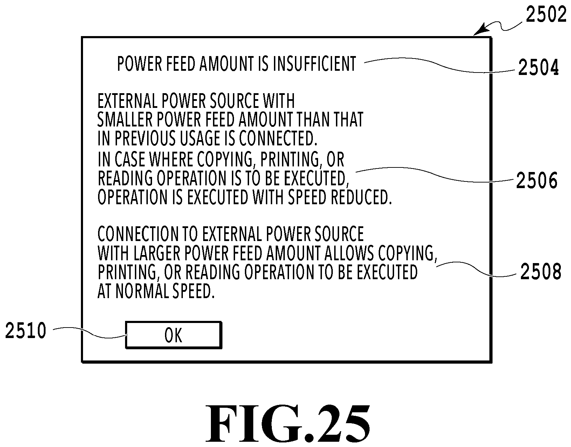

Next, a printing apparatus according to a fifth embodiment is explained with reference to Figs. 24 and 25. In the following explanation, the same reference numerals as those used in the first embodiment are used for configurations that are the same as or correspond to those in the printing apparatus according to the first embodiment described above, and detailed explanation of these configurations is omitted.

In the fifth embodiment, explanation is given of an example in which the user is notified only in the case where the operation modes are compared and the function restriction is applied.

Fig. 24 is a flowchart illustrating processing of comparing the operation mode with the operation mode of the previously-executed job at reception of the job. This processing is started in the case where the printing apparatus 10 receives the job from the user.

First, in step S2402, the ASIC 314 determines a specification of the USB.

In step S2404, the ASIC 314 sets the thresholds of the voltage V_{BAT} by using the table illustrated in Fig. 19A, based on the determination result of step S2402.

In step S2406, the ASIC 314 detects a value of the voltage V_{BAT} via the charger IC 304.

In step S2408, the ASIC 314 sets the operation mode by using the table of Fig. 19B, based on the determination result of step S2402 and the voltage V_{BAT} detected in step S2406.

In step S2410, the ASIC 314 determines whether or not the operation mode set in step S2408 is an operation mode with the function restriction. In the case where the operation mode is an operation mode with no function restriction, the ASIC 314 causes the processing to proceed to step S2418. In the case where the operation mode is an operation mode with the function restriction, the ASIC 314 causes the processing to proceed to step S2412.

In step S2418, since the operation mode is an operation mode with no function restriction, the ASIC 314 starts the job without notifying the user.

Meanwhile, in step S2412, the ASIC 314 reads the operation mode in the previous job execution.

In step S2414, the ASIC 314 compares the operation mode set in step S2408 with the operation mode read in step S2412. In the case where a function restriction is added from the previous mode, the ASIC 314 causes the processing to proceed to step S2416. If not, the ASIC 314 causes the processing to proceed to step S2418.

In step S2416, the ASIC 314 notifies the user of the added function restriction.

The above processing allows the user to be notified of the function restriction only in the case where the function restriction is added, and unnecessary notification can be eliminated.

Fig. 25 is a diagram illustrating an example of a notification screen displayed to the user in the case where the function restriction is added in the fifth embodiment.

In a function restriction notification screen 2502, notification of the following information is made. An error message 2504 indicates that the USB power feed amount is insufficient. An operation message 2506 notifies that the power feed amount from the connected external power source is smaller than that in the previous usage and thus the execution speed of the operation needs to be reduced. An instruction message 2508 notifies that the operation can be executed at the normal speed by connecting the printing apparatus 10 to an external power source with a higher USB power feed amount. In the case where an OK button 2510 is pressed, the operation is performed.

Performing the control as described above allows the user to grasp that the power feed amount is insufficient and the operation speed is reduced from the previous usage, and also allows the user to grasp that connection to an external apparatus with a higher power feed amount is necessary.

### (Other Embodiments)

Note that the above-mentioned embodiments may be modified as described in (1) to (7) described below.
(1) In the above embodiments, the notification processing is executed at the activation of the printing apparatus 10, the wireless LAN setting, the start of the copying operation, the start of the maintenance operation, the start of the printing operation, and the reading operation. However, the present disclosure is not limited to this. For example, the notification processing may be executed at two or more of the above-mentioned multiple timings, or may be executed at one of the above-mentioned multiple timings.
(2) In the above-mentioned embodiments, the printing apparatus 10 is configured to be connectable to the external apparatus (external power source) via the USB cable. However, the present disclosure is not limited to this. The printing apparatus 10 may be configured to be connectable to the external apparatus via any of various publicly-known wired interface cables. Moreover, in the above-mentioned embodiments, the printing apparatus 10 is configured to include the EDLC 302 as the power storage portion capable of storing power, and is capable of operating by using the power stored in the EDLC 302. However, the present disclosure is not limited to this, and the printing apparatus may be configured to include no EDLC 302.
(3) Although not particularly described in the above embodiments, the printing apparatus 10 is configured such that start instructions of the various operations can be inputted from a screen displayed on the display portion 240 of the operation panel 208. Accordingly, operations that cannot be executed depending on the power feed condition may be configured to be displayed in a grayed-out state in the screen and made unselectable. Note that a touch panel (not illustrated) may be provided in the operation panel 208. Also in this case, the operations that cannot be executed depending on the power feed condition are displayed in a grayed-out state and made unselectable.
(4) Although not particularly described in the above embodiments, a case where a user who cannot increase the power feed amount via the USB cable desires to suppress the notification is conceivable. Accordingly, the configuration may be such that the user can suppress the notification by performing setting in the printing apparatus 10. Moreover, the configuration may be such that illumination of a back light in the display portion 240 is dimmed depending on the power feed condition to suppress power consumption in the operation panel 208.
(5) In the above-mentioned second embodiment, the printing apparatus 10 can execute the notification processing and the power feed absence notification processing. However, the present disclosure is not limited to this, and the configuration may be such that the printing apparatus 10 can execute only the power feed absence notification processing. Moreover, in the above-mentioned third embodiment, the printing apparatus 10 can execute the notification processing, and displays the power feed notification screen. However, the present disclosure is not limited to this. The printing apparatus 10 may be configured to display only a state notification screen, or configured to display the state notification screen while being capable of executing the notification processing and the power feed absence notification processing.
(6) Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.
(7) The above embodiments and the various forms described above in (1) to (6) may be combined as appropriate.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A printing apparatus (10) capable of executing an operation by using power supplied from an external power source via a USB cable, the printing apparatus comprising:
an obtaining unit (216) configured to obtain information on power feed from the USB cable; and
a notification unit (216) capable of performing notification of a power feed condition and information on the operation in the printing apparatus based on the information on the power feed obtained by the obtaining unit, wherein
the information on the operation includes an instruction for enabling execution of the operation in the printing apparatus.

2. The printing apparatus according to claim 1, wherein the information on the operation further includes information indicating that the operation is possible with power consumption reduced.

3. The printing apparatus according to claim 2, wherein the instruction includes an instruction for enabling execution of the operation in the printing apparatus without reduction of the power consumption.

4. The printing apparatus according to any one of claims 1 to 3, wherein the information on the operation further includes information indicating that the operation is not executable.

5. The printing apparatus according to claim 4, wherein the information on the operation includes at least one of information indicating that a predetermined operation is not executable and information indicating that the printing apparatus is not operable.

6. The printing apparatus according to any one of claims 1 to 5, wherein the power feed condition includes at least one of information indicating that a power feed amount is insufficient and information indicating that power is not fed.

7. The printing apparatus according to any one of claims 1 to 6, wherein the power feed condition includes an icon indicating insufficiency of a power feed amount or an icon indicating absence of power feed, in addition to presence or absence of power feed.

8. The printing apparatus according to any one of claims 1 to 7, wherein the notification unit performs notification of the power feed condition and the information on the operation at at least one of a plurality of timings.

9. The printing apparatus according to claim 8, wherein the plurality of timings include a moment of activation of the printing apparatus.

10. The printing apparatus according to claim 8 or 9, further comprising a connection unit configured to perform wireless connection with an external apparatus, wherein
the plurality of timings include a moment of wireless connection setting with the external apparatus in the connection unit.

11. The printing apparatus according to any one of claims 8 to 10, further comprising a printing unit capable of performing printing on a print medium, wherein
the plurality of timings include a moment of start of a printing operation by the printing unit.

12. The printing apparatus according to any one of claims 8 to 11, further comprising a reading unit capable of reading an original, wherein
the plurality of timings include a moment of start of a reading operation by the reading unit.

13. A control method of a printing apparatus capable of executing an operation by using power supplied via a USB cable, the control method comprising:
obtaining information on power feed from the USB cable; and
performing notification of a power feed condition and information on the operation in the printing apparatus based on the information on the power feed obtained in the obtaining, wherein
the information on the operation includes an instruction for enabling execution of the operation in the printing apparatus.

14. The printing apparatus according to claim 1, comprising a chargeable power storage device built in the printing apparatus, wherein
the printing apparatus is operable by using at least one of power supplied via the USB cable and power of the power storage device,
the obtaining unit obtains information on a remaining power amount of the power storage device, and
the printing apparatus comprises a control unit configured cause the printing apparatus to execute a predetermined operation based on the information obtained by the obtaining unit.

15. The printing apparatus according to claim 14, wherein the obtaining unit obtains information on a power feed amount from the external power source based on the specification of the USB cable.

16. The printing apparatus according to claim 15, wherein the obtaining unit obtains voltage of the power storage device as the information on the remaining power amount of the power storage device.

17. The printing apparatus according to any one of claims 14 to 15, wherein the control unit sets a threshold of voltage of the power storage device based on the information obtained by the obtaining unit.

18. The printing apparatus according to claim 17, wherein, in the case where the voltage of the power storage device is equal to or lower than a first threshold being the threshold, the control unit causes the printing apparatus to perform only a charging operation of the power storage device.

19. The printing apparatus according to claim 18, wherein, in the case where the voltage of the power storage device is lower than a second threshold higher than the first threshold, the control unit causes the printing apparatus to perform an operation with speed reduced.

20. The printing apparatus according to claim 19, wherein the notification unit notifies a user of execution of the operation with the speed reduced in the case where the printing apparatus executes the operation with the speed reduced.

21. The printing apparatus according to claim 14, wherein, in the case where there is a restriction for the predetermined operation, the notification unit notifies a user of information on the restricted operation.

22. The printing apparatus according to claim 21, wherein, in the case where only charging of the power storage device is possible as the predetermined operation, the notification unit notifies the user that the power storage device is being charged.

23. The printing apparatus according to claim 14, wherein, in the case where there is a restriction for the predetermined operation, the notification unit performs notification of prompting the user to reconnect the printing apparatus to an external power source with a higher power feed amount or to a cable connected to the external power source.
